# EUROPÄISCHE PATENTSCHRIFT

(11) **EP 3 005 471 B1**
(45) Veröffentlichungstag und Bekanntmachung des Hinweises auf die Patenterteilung: **05.05.2021**
(21) Anmeldenummer: 14714175.8
(22) Anmeldetag: 27.03.2014
(51) Int. Cl.: H01Q 1/12, H01Q 3/12, H01Q 3/32, F16H 57/021

(54) **MODULARE VERSTELLEINRICHTUNG, INSBESONDERE FÜR HF-GERÄTE**
MODULAR ADJUSTING DEVICE, IN PARTICULAR FOR RF DEVICES
SYSTÈME DE RÉGLAGE MODULAIRE, EN PARTICULIER POUR APPAREILS HF

(30) Priorität: 31.05.2013 DE 102013009224
(43) Veröffentlichungstag der Anmeldung: 13.04.2016
(73) Patentinhaber: TELEFONAKTIEBOLAGET LM ERICSSON (PUBL), 164 83 Stockholm (SE)
(72) Erfinder: HÄNTSCH, Ralf, 83064 Raubling (DE)
(74) Vertreter: Flach Bauer Stahl Patentanwälte Partnerschaft mbB
(86) Internationale Anmeldenummer: PCT/EP2014/000836
(87) Internationale Veröffentlichungsnummer: WO 2014/191069

(56) Entgegenhaltungen:
- EP-A1- 0 087 672
- CN-U- 202 616 071
- DE-A1- 4 141 150
- DE-A1- 10 160 056
- DE-A1-102012 103 886
- US-A1- 2002 196 193
- US-A1- 2011 267 231

## Beschreibung

Die Erfindung betrifft eine modulare Verstelleinrichtung, insbesondere für HF-Geräte nach dem Oberbegriff des Anspruchs 1.

Es sind zahlreiche Anwendungsfälle, insbesondere auf dem Gebiet der Hochfrequenztechnik bekannt, in denen Verstelleinrichtungen zur Betätigung von Stellgliedern notwendig sind.

So ist es beispielsweise aus der WO 02/061877 A2 bekannt, mittels einer Strahlformeinrichtung, einer sogenannten RET-Einheit, Phasenschieber im Inneren eines Antennengehäuses (Radoms) entsprechend einzustellen, um den sogenannten Down-Tilt-Winkel zu verändern. Dies kann motorisch beispielsweise über eine außerhalb des Antennengehäuses anbringbare RET-Einheit erfolgen.

Im Inneren des Antennengehäuses werden allerdings zunehmend mehr Komponenten, auch elektronisch aktive Komponenten wie Filter-Baugruppen, Verstärkereinheiten etc. untergebracht, so dass zunehmend weniger Bauraum zur Verfügung steht. Von daher ist es beispielsweise notwendig, von einer externen Stelleinrichtung, wie einer RET-Einheit, die im Inneren der Antenne gegebenenfalls vorgesehenen Phasenschieber über eine geeignete Übertragungseinrichtung anzutreiben.

Aus der WO 2009/102775 A2 ist eine Multi-Strahlformeinrichtung bekannt. Diese Multi-Strahlformeinrichtung umfasst beispielsweise drei manuell zu bedienende Down-Tilt-Einstelleinrichtungen, die jeweils eine Einstellungsachse umfassen, die an der unteren Abdeckplatte des Antennengehäuses überstehen und mit einem Einstellrand versehen sind. Dort kann manuell die individuelle Einstellung des Down-Tilt-Winkels vorgenommen werden.

Gemäß der DE 10 2010 012 991 B4 wird vorgeschlagen, mittels einer Multi-Strahlformeinrichtung unterschiedliche Stellglieder (beispielsweise zur Absenkung des Down-Tilt-Winkels) anzutreiben und damit einzustellen, wozu entsprechende mechanische Schnitt- und/oder Kopplungsstellen vorgesehen sind.

Im Inneren des Antennengehäuses ist es dann in der Regel notwendig, über entsprechende Umlenkgetriebe, beispielsweise in Form von Winkelgetrieben und/oder Schneckengetrieben, den Antriebsstrang so zu verlegen, dass von den bevorzugt motorischen Antriebseinrichtungen (in der Regel außerhalb des Antennengehäuses) beispielsweise die an verschiedenen Stellen im Inneren des Antennengehäuses sitzenden Phasenschieber (oder andere Stellgruppen) entsprechend angetrieben, verstellt und dadurch eingestellt werden können.

Entsprechende Verstelleinrichtungen können beispielsweise ein Winkelgetriebe mit Kegelrädern und eine Gehäuseanordnung aus Zinkdruckguss umfassen. Dort ist in hülsenförmigen Wellenaufnahmen eine Stahlwelle eingesteckt, an deren gegenüberliegenden Enden ein beispielsweise aus Kunststoff bestehendes Kegelrad aufgesetzt ist und mittels einer Madenschraube befestigt werden kann. Auch der zweite Antriebsstrang des Kegelradgetriebes kann entsprechend aufgebaut sein.

Die Verlegung eines derartigen Antriebsstranges ist im Einzelfall aber durchaus aufwendig, da gegebenenfalls mehrfache Umlenkungen notwendig sind und die entsprechenden Teile einen nicht unbeachtlichen Montageaufwand erfordern.

Ein gattungsbildender Stand der Technik mit einem Schneckenbauteil ist aus der DE 101 07 601 A1 bekannt geworden. Das Schneckenbauteil umfasst zwei axial versetzt zueinander liegende Lagebereiche zur Lagerung in einem Gehäuse eines Stellantriebes mit zugehörigen Anlaufscheiben zur Axiallagerung. Zur Lagerung in dem Gehäuse ist ein erster und ein axial dazu versetzt liegender zweiter Aufnahmebock vorgesehen, in welche die Lagerabschnitte der Schnecke eingesetzt werden und die Schnecke darüber gehalten werden kann. Die an der Schneckenwelle ausgebildeten Anlaufscheiben begrenzen die axiale Länge des ersten und zweiten Lagerbereiches der Schnecke, worüber diese letztlich axial anschlagsbegrenzt gehalten ist und mit einem in dem Getriebegehäuse untergebrachten Schneckenrad kämmen kann.

Aus der DE 101 60 056 A1 ist ein Zahnradantrieb für einen Elektromotor als bekannt zu entnehmen. Der Zahnradantrieb umfasst eine schneckenförmige Welle, die mit einem Schneckenrad kämmt, wobei die Achse der Schnecke in zugehörigen Lagern gehalten ist. Die Lager für die Schneckenwelle bestehen dabei beispielsweise aus elastischem Kunststoffmaterial, um relative Bewegungen zwischen diesen zu ermöglichen, so dass die Achse im Einschnappkontakt zwischen den Ausnehmungen aufgenommen werden kann.

Ein spielreduziertes Schneckengetriebe auch aus der DE 42 16 332 A1 als bekannt zu entnehmen. Ein- oder beidseitig zu dem eigentlichen Schneckenbereich der Schneckenwelle sind zylindrische Wellenbereiche ausgebildet, denen Lagerschalen zur radialen Lagerung zugeordnet sind, und zwar mit wenigsten einem Lagerbund zur axialen Abstützung der Schnecke in jeweils eine Richtung.

Ein Zahnradantrieb für einen Elektromotor ist aus der DE 101 60 056 A1 zu entnehmen. Gezeigt ist ein Elektromotor, dessen Spindel-Abtriebswelle mit einem Zahnrad und dieses mit einer Gewindestange kämmt, die wiederum mit einem Zahnrad im Eingriff steht. Die Gewindestange selbst ist an ihren beiden überliegenden Wellenenden in zugehörigen Lagern gelagert. Dabei kann die Schneckenwelle in diesen Stützlagern mittels eines Einschnappkontaktes gehalten werden.

Ein sogenannter Aktor mit einem entsprechenden Aktorengehäuse ist aus der DE 10 2012 103886 A1 zu entnehmen. Im Inneren des Gehäuses ist eine Welle gelagert, an deren einem Stirnende ein Kegelrad sitzt, welches mit einem weiteren Kegelrad kämmt. Dieses weitere Kegelrad ist auf einer feststehenden Welle drehbar angeordnet. Die feststehende Welle selbst ist mittels einer sogenannten Wellenaufnahme 65 an einer Stützplatte gehalten. Die Wellenaufnahme, in der die feststehende Welle an einem stirnseitigen Ende festgehalten ist, wird über eine Rasteinrichtung in der Stützplatte 25 verankert.

Schließlich ist aus der EP 0 087 672 A1 oder der CN 202 616 071 U zu entnehmen, dass beispielsweise Kegelräder mittels einer sogenannten Steckkupplung mit einer Welle verbindbar sind.

Demgegenüber ist es Aufgabe der vorliegenden Erfindung eine verbesserte modulare Verstelleinrichtung, insbesondere unter Verwendung von Getrieben zu entwickeln, mit der einfach unterschiedliche Antriebsstränge und/oder Antriebswege, insbesondere zum Antrieb von Hochfrequenz-Geräten und -Baugruppen realisiert werden können.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird eine deutlich verbesserte modulare Verstelleinrichtung für HF-Geräte und -Baugruppen geschaffen, die sich durch eine extreme Einfachheit bei maximaler Variabilität und Anpassungsfähigkeit auszeichnet.

Dabei kann die erfindungsgemäße modulare Verstelleinrichtung so aufgebaut sein, dass in einem Gehäuse, beispielsweise in einem Antennengehäuse, über beliebige Umlenkstellen eine durchgängige Antriebsverbindung bis zu einem Stellglied aufgebaut werden kann, das entsprechend eingestellt und/oder verstellt werden soll. Beispielsweise können über eine außerhalb des Antennengehäuses vorgesehene RET-Einheit Phasenschieber im Inneren des Antennengehäuses angeordnet sein, die an unterschiedlichen Stellen sitzen können.

Insbesondere im Hinblick auf die hohe Packungsdichte heutiger Antennenanordnungen und zugehöriger aktiver Komponenten, die im Antennengehäuse auf der die Strahler aufnehmenden Seite eines Reflektors oder auch auf der Rückseite des Reflektors vorgesehen sind, verbleibt zunehmend weniger Raum, hier entsprechende Antriebsstränge zu verlegen.

Die Erfindung zeichnet sich insbesondere auch dadurch aus, dass in einer bevorzugten Ausführungsform ohne jedes Werkzeug entsprechende modulare Antriebs-Übertragungseinrichtungen aufgebaut und realisiert werden können.

Dazu verwendet die Erfindung Getriebeausbildungen und Getriebeverbindungen mit jeweils einem ersten und einem zweiten Getriebeglied, die miteinander in Wirkverbindung stehen. Die Besonderheit ist nunmehr, dass beide miteinander in Triebverbindung stehende Getriebeglieder, beispielsweise die beiden Getriebeglieder eines Winkelgetriebes (Kegelradgetriebes) oder eines Schneckengetriebes, an einem entsprechenden Getriebe-Basismodul lediglich durch Eindrücken in ihre Position mittels einer Schnappverbindung eingebaut, positioniert und gehalten werden können.

Dabei können die einzelnen Getriebeglieder in die Schnappverbindung eingefügt und anschließend mit einer axialen Welle verbunden werden. Möglich ist aber auch, dass das betreffende Getriebeglied erst mit einer zugehörigen Welle verbunden und dann in den betreffenden Schnappsitz des Getriebe-Moduls eingeklipst wird.

Die Verbindung der einzelnen Getriebeglieder mit den Wellen erfolgt bevorzugt mittels einer Steckverbindung. Die Welle weist dabei insbesondere über ihre gesamte Länge einen unrunden Querschnitt auf, beispielsweise einen n-polygonalen Querschnitt in Form eines regelmäßigen Sechsecks. Die entsprechende Steckausnehmung an einem betreffenden Getriebeglied ist so geformt, dass hier das Ende der Welle eingesteckt werden kann. Durch die unrunde Verbindung erfolgt stets einwandfrei eine form- und kraftschlüssige Verbindung in Form einer drehfesten Verbindung.

Da die Getriebe-Basismodule beispielsweise auf einen Reflektor oder in einem Gehäuse an entsprechenden Stellen befestigt sein können, beispielsweise auch mittels einer Schnapp- oder Klipsverbindung, können die Wellen eine Länge aufweisen, die beispielsweise geringfügig kürzer ist als der maximal lichte Steckabstand zwischen zwei über die Welle zu verbindenden Getriebegliedern. Dadurch können temperaturbedingte Längenausgleiche problemlos realisiert werden. Da die Überdeckung zwischen dem Wellenende und der Steckaufnahme in einem Getriebeglied ausreichend bemessen ist, ist auch bei Temperaturabsenkung sichergestellt, dass stets eine ausreichende Überlappung zwischen Welle und Wellenaufnahme im Getriebeglied erhalten bleibt, also stets die drehfeste Verbindung weiterhin besteht.

In einer besonders bevorzugten Ausführungsform können unterschiedliche Getriebe-Basismodule eingesetzt werden. So ist es beispielsweise möglich, ein Getriebe-Basismodul zu verwenden, in welchem z.B. Kegelräder nicht nur in einem 90° Winkel, sondern in einem beliebigen vorgebbaren Winkel zueinander eingesteckt werden können. Dabei können die Getriebe-Basismodule vordefinierte Winkel bereitstellen. Möglich sind aber auch Ausführungsformen, in welchen beispielsweise ein Getriebeglied in unterschiedlicher Winkellage zum anderen eingefügt werden kann.

Schließlich sind auch Getriebe-Basismodule möglich, bei denen eine Triebverbindung durch die Basiswand hindurch auf die andere Seite einer Gehäusewand, eines Reflektors etc. realisiert werden kann.

Da es im Rahmen der Erfindung ferner möglich ist, alle Bauteile aus dielektrischem Material, insbesondere Kunststoff zu fertigen, lässt sich vor allem auch problemlos eine intermodulationsfeste modulare Stelleinrichtung realisieren, was insbesondere für HF-Geräte von enormer Bedeutung ist. Denn die Verwendung von elektrisch leitfähigen Teilen, wie es insbesondere bei Getriebeausbildungen im Stand der Technik notwendig war, führte häufig zu Intermodulationsproblemen.

Aus der Erläuterung ergibt sich, dass durch die Erfindung eine Reihe von Vorteilen realisiert werden können, wie beispielsweise:
- Alle Fügevorgänge können durch Schnappverbindungen umgesetzt werden;
- werden für die in Eingriff stehenden Getriebeglieder beispielsweise Kegelräder verwendet, so können diese problemlos nacheinander montiert werden; eine Momentübertragungskette kann durch Einschnappen des letzten Kegelrades geschlossen werden, wobei die Montagereihenfolge beliebig ist;
- die vorstehend genannten Vorteile gelten gleichermaßen auch dann, wenn für die Getriebeglieder anstelle von Kegelrädern eine Getriebeschnecke und ein Schneckenrad verwendet werden, die in Eingriff stehen;
- von daher sind keine zusätzlichen Befestigungselemente und auch kein Werkzeug erforderlich;
- die Montage kann allein mit Handkraft einfach und kostengünstig umgesetzt werden;
- alle Teile können aus Kunststoff bestehen, so dass die gesamte Antriebsverbindung in der Tat intermodulationsfest ausgebildet ist;
- die notwendige Teile für das Kegelradgetriebe aber auch für ein Schneckengetriebe können beispielsweise mittels Spritzguss umgesetzt werden; auch dies führt zu einer Kostenermäßigung;
- die Schnappverbindungen zwischen den einzelnen Getriebegliedern und der die Getriebeglieder haltenden Lagerplatte oder Gehäuseanordnung kann so dimensioniert sein, dass Winkelfehler (beispielsweise bis 5°) der Wellen problemlos ausgeglichen werden können; ebenso können auch Höhenunterschiede problemlos überbrückt werden;
- im Rahmen der Erfindung lässt sich insgesamt eine verlustarme Drehmomentübertragung ermöglichen;
- die gesamte Anordnung, das heißt die Ausbildung der in Eingriff stehenden Getriebeglieder erfordert nur einen geringen Platzbedarf; dabei zeichnet sich die Erfindung auch dadurch aus, dass sie sehr flachbauend ist;
- im Falle der Kegelräder ist nur eine Kegelradverzahnung (die im Werkzeugbau sehr teuer ist) erforderlich; verschiedene Abtriebswinkel können mit verschiedenen Lagerplatten realisiert werden;
- insgesamt ergibt sich eine hohe Verstellgenauigkeit; und
- die im Rahmen der Erfindung eingesetzte Welle kann eine sehr hohe Elastizität aufweisen, wobei die Welle so ausgebildet sein kann, dass sie die Eigenschaften einer biegsamen Welle aufweist und dabei große Biegeradien ermöglicht, gleichwohl aber sehr torsions- und damit drehstabil ist.

Dabei kann die modulare Verstelleinrichtung im Rahmen der Erfindung für die unterschiedlichsten Hochfrequenzgeräte, zum Beispiel Antennen, Filter, Verstärker, Aufbereitungsanlagen etc. eingesetzt werden. Beschränkungen gibt es insoweit nicht.

Die Erfindung wird nachfolgend anhand von Ausführungsbeispielen näher erläutert. Dabei zeigen im Einzelnen:
- Figur 1:: eine räumliche Ansicht eines Gehäuses oder der Rückseite einer Antenne oder Mobilfunkantenne bei abgenommener, rückseitiger Verkleidung unter Erläuterung eines ersten Ausführungsbeispiels einer modularen Verstelleinrichtung für HF-Geräte;
- Figur 2:: eine räumliche Darstellung eines Umlenkgetriebes in Form eines Kegelradgetriebes;
- Figur 3:: ein entsprechendes Getriebe-Basismodul zur Aufnahme der in Figur 2 gezeigten Kegelräder, jedoch ohne eingesetzte Kegelräder;
- Figur 4:: eine räumliche Darstellung eines Kegelrades, wie es bei den vorstehend erläuterten Kegelradgetrieben eingesetzt wird;
- Figur 5:: eine Unteransicht eines Getriebegehäusedeckels;
- Figur 6:: das anhand der Figuren 1 bis 5 erläuterte Kegelradgetriebe mit dem in Figur 5 gezeigten aufgesetzten und verrasteten Getriebegehäusedeckel;
- Figur 7:: eine räumliche Darstellung eines Ausschnitts einer Antriebswelle;
- Figur 8:: ein abgewandeltes Ausführungsbeispiel mit einer von 90° abweichenden Winkelausrichtung zwischen Antriebs- und Abtriebswelle eines Kegelradgetriebes;
- Figur 9:: ein weiteres Ausführungsbeispiel zur Erzeugung einer Drehrichtungsumkehr- und/oder zur Erzeugung einer Leistungsverzweigung;
- Figur 10:: ein abgewandeltes Ausführungsbeispiel in räumlicher Darstellung, bei welchem ein Antriebsstrang durch eine Öffnung in einer Wand, Bodenplatte etc. hindurchgeführt ist;
- Figur 11:: das in Figur 10 gezeigte Getriebe-Basismodul in alleiniger Wiedergabe ohne eingesetzte Kegelräder;
- Figur 12:: ein abgewandeltes Ausführungsbeispiel mit parallel verzweigtem Antriebsgestänge;
- Figur 13:: eine vergrößerte Detaildarstellung (Ausschnitt) aus Figur 12;
- Figur 14:: ein abgewandeltes Ausführungsbeispiel eines Schneckenradgetriebes in räumlicher Darstellung;
- Figur 15:: das in Figur 14 gezeigte Schneckenradgetriebe lediglich unter Wiedergabe der Schnecke und des Schneckenrades;
- Figur 16:: eine räumliche Darstellung des GetriebeBasismoduls, wie es bei dem Schneckenradgetriebe gemäß Figuren 14 und 15 verwendet wird; und
- Figur 17:: eine entsprechende Darstellung zu Figur 14, jedoch bei aufgesetztem Gehäusedeckel zum Schutz des Schneckenradgetriebes.

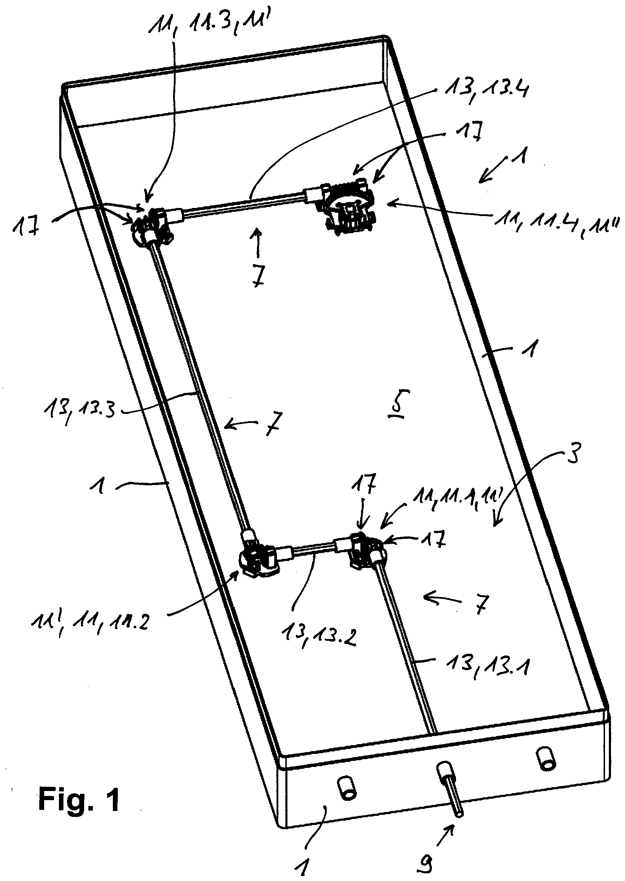

In Figur 1 ist beispielhaft in räumlicher Darstellung ein offenes Gehäuse 1 gezeigt, welches üblicherweise mit einem nicht näher dargestellten Deckel verschließbar ist, der auf die Gehäusewände 1 aufgesetzt wird.

Im gezeigten Ausführungsbeispiel ist im Gehäuseinneren 3 ein erstes Ausführungsbeispiel einer erfindungsgemäßen modularen Verstelleinrichtung für HF-Geräte wiedergegeben, die auf dem Boden 5, d.h. der Bodenplatte 5, montiert ist. Es kann sich hierbei gleichermaßen auch um einen Reflektor einer Antenne, insbesondere einer Mobilfunkantenne handeln, wobei auf der gegenüberliegenden Seite des Bodens oder Reflektors 5 dann beispielsweise übliche Mobilfunkantennen angeordnet sind, die über ein in Figur 1 ebenfalls nicht gezeigtes Radom gegen Umwelteinflüsse geschützt und überdeckt sind.

Ebenso ist es möglich, dass im Gehäuse eine Leiterplatte oder eine Trägerplatte vorgesehen ist, auf die die Verstelleinrichtung montiert wird.

Figur 1 zeigt dabei einen Antriebsstrang 7, welcher beispielsweise von einer außerhalb des Gehäuses liegenden Antriebsseite 9 ausgeht, also im gezeigten Ausführungsbeispiel außerhalb des Gehäuses liegt (was für die Funktionsweise der Erfindung ohne Bedeutung ist), wobei hier außerhalb des Gehäuses 1 beispielsweise eine motorische Antriebseinrichtung oder eine manuelle Betätigungseinrichtung an dem Antriebsstrang 7 angebracht sein kann. Im Falle einer Mobilfunkantenne könnte hier außerhalb des Gehäuses beispielsweise eine RET-Einheit zur Verstellung von Phasenschiebern innerhalb des Antennengehäuses angebracht sein, die im gezeigten Ausführungsbeispiel auf der in Figur 1 nicht sichtbaren Rückseite der Bodenplatte oder des Reflektors 5 angeordnet ist.

Der gezeigte Antriebsstrang 7 verläuft im gezeigten Ausführungsbeispiel von der Antriebsseite 9 unter Verwendung einer Welle 13 über vier in Figur 1 sichtbare Getriebeanordnungen 11 in Form von Umlenkgetrieben auf die in Figur 1 rückwärtige, nicht sichtbare Seite des Bodens oder Reflektors 5.

Über die antreibbare Welle 13, das heißt einem ersten Wellenabschnitt 13.1, erfolgt also über die erste Getriebeanordnung 11.1, beispielsweise in Form eines Winkel- oder Kegelradgetriebes, eine Umlenkung des Antriebsstranges um 90°, worüber eine nachfolgende Welle 13.2 angetrieben wird, die wiederum als Eingangswelle für ein zweites nachfolgendes Umlenkgetriebe 11.2 dient, welches ebenfalls wiederum beispielsweise als Winkelgetriebe ausgebildet sein kann. Über einen nachfolgenden dritten Wellenstrang 13.3 wird dann ein drittes Umlenkgetriebe 11.3 und über einen nachfolgenden vierten Wellenstrang 13.4 ein viertes Getriebe 11.4 angetrieben, ebenfalls wieder in Form eines Umlenkgetriebes, welches hier als Übersetzungsgetriebe ausgebildet ist.

Während die ersten drei Umlenkgetriebe beispielsweise als Kegelradgetriebe ausgebildet sein können, ist das vierte Umlenkgetriebe 11.4 als Schneckengetriebe ausgebildet.

Aus Figur 1 ist dabei auch zu ersehen, dass jedes der erwähnten Getriebe, das heißt insbesondere Umlenkgetriebe 11, jeweils zwei miteinander kämmende, also zwei miteinander in Eingriff stehende Getriebeglieder 17 umfasst. Wie sich anhand späterer Ausführungsbeispiele noch zeigt, umfasst jedes Getriebe 11 zumindest zwei in Eingriff miteinander stehende Getriebeglieder 17. Bei den Getrieben 11.1 bis 11.3, das heißt den Kegelradgetrieben 11' werden dabei im gezeigten Ausführungsbeispiel für die jeweils in Eingriff miteinander stehenden Getriebeglieder 17 Kegelräder 129, 131 verwendet, das heißt identische Kegelräder 129, 131, wohingegen beim vierten Getriebe ein Umlenkgetriebe 11.4, das heißt ein Schneckenradgetriebe 11" eingesetzt ist, dessen beide miteinander in Eingriff stehenden Getriebeglieder 17 zum einen aus einer Schnecke 129' und zum anderen aus einem Schneckenrad 131' bestehen, wie nachfolgend noch erläutert wird.

Nachfolgend wird auf den weiteren Aufbau der einzelnen Getriebeanordnungen eingegangen.

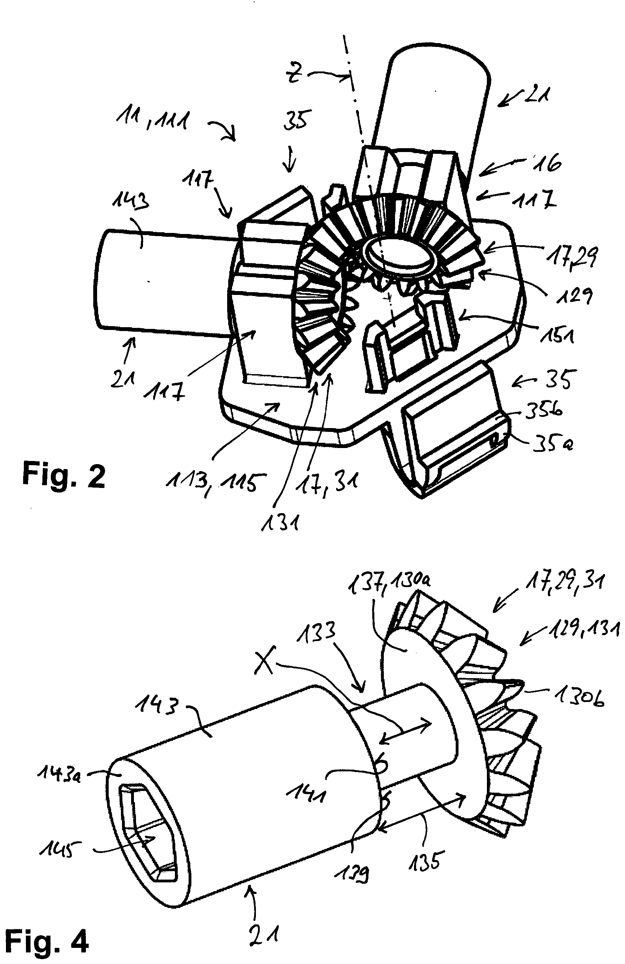

In Figur 2 ist ein Ausschnitt eines Umlenkgetriebes 11 in vergrößerter Detaildarstellung räumlich wiedergegeben, welches in Form eines Kegelradgetriebes 11' ausgebildet ist.

Dazu umfasst das Kegelradgetriebe 11' ein Getriebe-Basismodul 113, welches nachfolgend teilweise auch als Getriebe-Lagerplatte 115 bezeichnet wird.

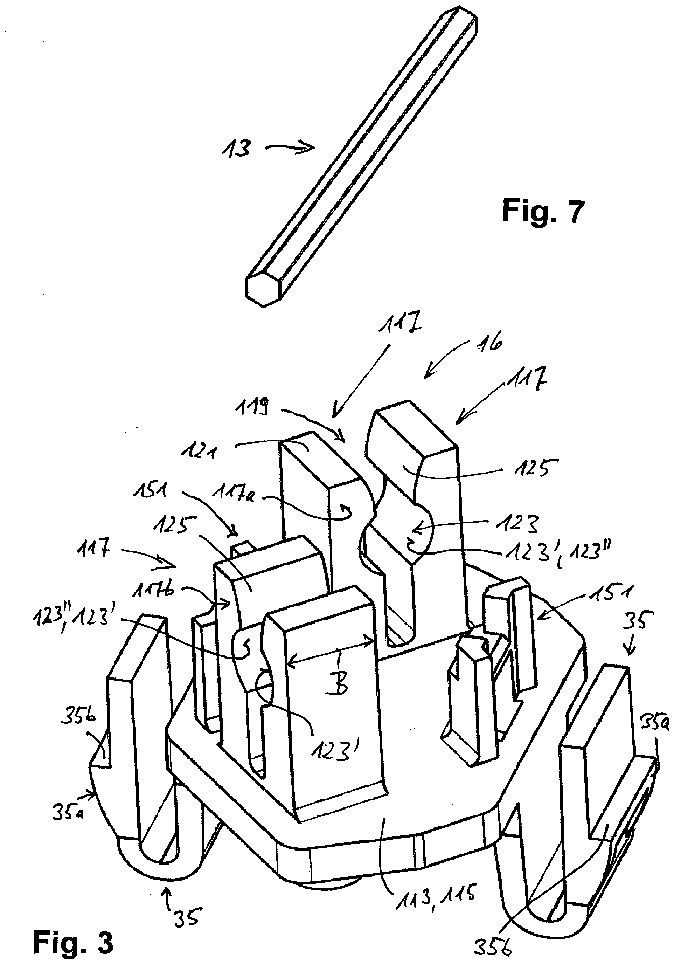

An der Getriebe-Lagerplatte 115 sind im gezeigten Ausführungsbeispiel in Draufsicht um 90° versetzt liegend jeweils zwei im Seitenabstand parallel zueinander verlaufende Schnappfinger oder -haken 117 ausgebildet, die in vergrößerter Darstellung auch aus Figur 3 zu entnehmen sind.

Daraus ist zu ersehen, dass die beiden, eine Schnapp- und/oder Rasteinrichtung 16 bildenden Schnappfinger 117 durch einen Spalt 119 voneinander getrennt sind. Die Schnappfinger oder -haken 117 weisen zu den außenliegenden Fingerenden 121, zur Getriebe-Lagerplatte 115 versetzt liegend, eine näherungsweise halbzylinderförmige Ausnehmung 123 auf, die in den beiden Schnappfingern 117 durch jeweils eine konkave Ausnehmung 123' gebildet ist, die aufeinander zu weisen. Dadurch ergibt sich in Seitenansicht letztlich ein zylinderförmiger Aufnahmeraum 123, in welchem die nachfolgend noch erörterten Halteabschnitte der Kegelräder eingeschnappt werden können.

Um den Einschnappvorgang zu erleichtern, sind die aufeinander zu weisenden Innenseiten 125 der jeweils zusammenwirkenden beiden Schnappfinger 117 vom Fingerende 121 in Richtung des zylinderförmigen Aufnahmeraums 123 keilförmig zunehmend oder mit konvexen Anlageflächen zunehmend ausgebildet, was den nachfolgend erörterten Einschnappvorgang der Getriebeglieder vereinfacht. Mit anderen Worten ist der Spalt 119 vom oberen Ende 121 der Schnappfinger oder -haken 117 in Richtung Lagerplatte, das heißt zumindest bis zu dem zylinderförmigen Aufnahmeraum 123 konisch verjüngt ausgebildet, wobei der anschließende Aufnahmeraum 123 eine größere Quererstreckung aufweist, als der Spalt 119, so dass dadurch die hakenförmigen Schnappfinger mit einer Art Hinterschneidung ausgebildet sind. Um die Elastizität der Schnappfinger oder -haken 117 zu erhöhen, ist der Spalt 119 über die zylinderförmige Aufnehmung 123 hinweg weiter nach unten in Richtung Lagerplatte 115 verlängert und endet im gezeigten Ausführungsbeispiel kurz vor der Ebene der Lagerplatte 115.

Im gezeigten Ausführungsbeispiel nach Figuren 2 und 3 sind die so gebildeten Schnapphaken oder Kliphaken 117 um eine Zentralachse Z um 90° versetzt liegend ausgerichtet (die senkrecht zur Lagerplatte 115 und damit im montierten Zustand senkrecht zur Ebene des Bodens 5 des Gehäuses 1 verläuft), da sie zur Aufnahme und Halterung von Kegelrädern dienen, die ein 90° Winkelgetriebe bilden sollen.

Anhand von Figur 4 ist nun eines der in Figur 2 eingesetzten Getriebeglieder 17 gezeigt, nämlich ein erstes Getriebeglied 29, das dann mit einem zweiten Getriebeglied 31 zusammenwirkt, wobei bei dem erläuterten Ausführungsbeispiel das erste und das zweite Getriebeglied 29, 31 identisch ausgebildet sind.

Die beiden Getriebeglieder 29, 31 sind in Form eines ersten Kegelrades 129 sowie eines zweiten Kegelrades 131 ausgebildet, und zwar mit einer Lagerwelle 133, die sich in axialer Richtung X des so gebildeten Getriebeglieds 29, 31 erstreckt. Die Lagerwelle 133 weist eine Lagerwellen-Längserstreckung 135 auf, die durch zwei axial versetzt liegende Anschläge 137, 139 begrenzt ist. Der erste Anschlag 137 bildet die Rückseite 130a des Kegelrades 129, 131, welche im gezeigten Ausführungsbeispiel als sich radial erstreckende ebene Fläche ausgebildet ist. Auf der Frontseite hierzu ist die Verzahnung 130b des so gebildeten Kegelrades 129 ausgebildet.

Der zu dem ersten Anschlag 137 gegenüberliegende, in Lagerwellen-Längserstreckungsrichtung X beabstandete zweite Anschlag 139 ist durch den die Lagerwelle 133 umgebenden, nach außen vorspringenden ringförmigen Schulteransatz 141 gebildet, an welchem die Lagerwelle 133 in einen demgegenüber dickeren Wellen-Verbindungsabschnitt 143 übergeht. Dieser Wellen-Verbindungsabschnitt 143 weist an seiner zum Kegelrad 129 gegenüberliegenden Stirnseite 143a eine Stecköffnung 145 auf, die einen nachfolgend noch erörterten unrunden Querschnitt aufweist und sich mit einer ausreichenden Einstecklänge in dem Wellen-Verbindungsabschnitt 143 erstreckt.

Der Durchmesser der Lagerwelle 133 ist so bemessen, dass er in etwa dem lichten Abstand und damit dem Durchmesser des zylindrischen Aufnahmeraums 123 zwischen den die Lagerflächen 123' bildenden Innenseiten 125 der Schnappfinger 117, also der Schnapphaken 117, entspricht.

Zur Montage des Kegelradgetriebes muss also lediglich ein erstes und zweites Getriebeglied 29, 31, in Form der in diesem Ausführungsbeispiel identischen Kegelräder 129, 131 mit ihrem Lagerwellen-Abschnitt 133 auf den nach unten hin schmäler werdenden Spalt 119 der benachbart zueinander liegenden Schnappfinger 117 eingedrückt werden, so dass die elastischen Schnappfinger 117 voneinander weg gebogen werden, bis die Lagerwelle 133 in die beiden halbzylinderförmigen Ausnehmungen 123' an den beiden benachbart zueinander angeordneten Schnappfingern 117 einrastet und die Schnappfinger 117 die Lagerwelle 133 weitgehend umgreifend wieder in ihre in Figur 3 gezeigte Ausgangsstellung elastisch zurückschwingen.

Anschließend kann an der zweiten Schnappfingeranordnung das zweite zum ersten Kegelrad in 90°-Richtung versetzt ausgerichtete Kegelrad 131 in gleicher Weise in der zugeordneten Schnappeinrichtung eingesetzt werden, wobei während des Einschnappvorganges des zweiten Kegelrades die Verzahnungen 130b der beiden Kegelräder 129, 131 ineinandergreifen, somit also in Wirkverbindung gelangen und in Einsatz miteinander kämmen können.

Da die axiale Länge der Lagerwelle 133 gleich oder geringfügig größer ist als die dazu parallele axiale Breite B oder Erstreckungsrichtung der Schnapp- und/oder Rasteinrichtung 16 mit den Schnappfingern 117, kommen die beiden Anschläge 137, 139 der Kegelräder 129, 131 an den beiden gegenüberliegenden Seiten 117a, 117b der Schnappeinrichtung 16, also der Schnappfinger und/oder - haken 117 zu liegen. Durch diese Anschläge ist das jeweilige Kegelrad 129, 131 faktisch gegen ein axiales Verschieben entsprechend dem vorgewählten Spiel gesichert. Dadurch ist bereits das zuerst montierte Kegelrad unverlierbar gehalten.

Wie aus den Figuren 2 und 3 auch zu ersehen ist, sind an dem Getriebe-Basismodul 113, also an der Getriebe-Lagerplatte 115 zwei gegenüberliegende, in Seitenansicht U-förmig ausgebildete elastische Rastfinger 35 vorgesehen, die es ermöglichen, dass das Getriebe-Basismodul 113 vor oder nach der Bestückung mit den GetriebeGliedern 29, 31 an einem Boden oder einer Wand 5 verankert werden kann, indem die Getriebe-Lagerplatte 115 an den entsprechend vorbereiteten Stellen beispielsweise eines Bleches aufgesetzt wird, derart, dass die U-förmigen Rastfinger 147 durch rechteckförmige Schlitze im Boden 5 hindurchgreifen können, während des Aufsteckvorgangs dabei elastisch auf die eigentliche Platte 115 zu verschwenkt werden, nämlich durch den in entgegengesetzter Einsteckrichtung keilförmig erweiterten Auflaufabschnitt 35a, bis der stufenförmige Rücksprung 35b die Unterseite des die Getriebe-Lagerplatte 115 haltenden Bodens, Bodenplatte oder Wand erreicht hat, so dass die Rastfinger 147 wieder nach außen schwenken und der stufenförmige Rücksprung 45b an der gegenüberliegenden Seite des Bodens oder der Bodenplatte 5 anliegt und damit das Getriebe-Basismodul 113 sichert.

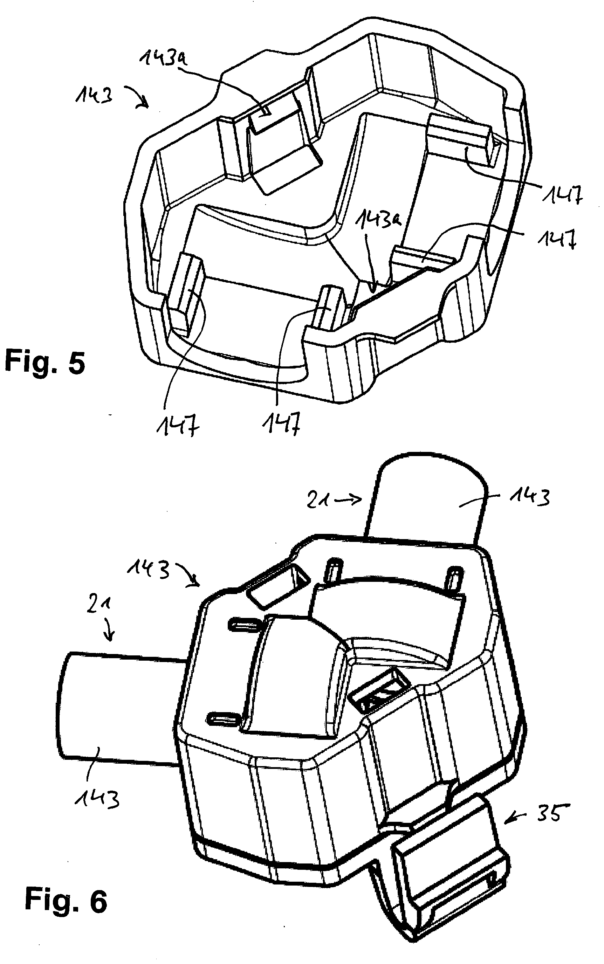

Ferner sind noch auf der Oberseite der Getriebe-Lagerplatte 115 an gegenüberliegenden Stellen zwei sich erhebende Rastböcke 151 ausgebildet, auf die ein in Figur 5 von der Unterseite her sichtbarer Gehäusedeckel 143 aufgesetzt und rastend fixiert werden kann, der dann an den Rastböcken 151 durch entsprechende Rasteinrichtungen 143a in der Deckelinnenseite einrastet und somit fest mit dem Getriebe-Basismodul 113 verbunden ist, und zwar unter schützendem Einschluss der darin befindlichen Getriebeglieder 29, 31 (Figur 6).

Im Deckel sind Zapfen 147 ausgebildet, die nach dem Aufsetzen des Deckels 143 die Schnapphaken 117 der Getriebe-Lagerplatte 115 umfassen und verriegeln. Dadurch wird verhindert, dass sich die Schnapphaken 117 durch hohe Betriebslasten nach außen verformen und die Getriebeglieder 29, 31 nicht mehr zuverlässig lagern können. Das Umlenkgetriebe 11 kann mit aufgesetztem Deckel 143 höhere Drehmomente übertragen.

In so vormontierter Form kann die gesamte Getriebeanordnung mit den erwähnten Rastfingern 35 an einer Verankerungsplatte verankert werden.

Wie bereits erwähnt, weisen die Getriebeglieder 29, 31, im gezeigten Ausführungsbeispiel die beiden identisch ausgebildeten Kegelräder 129, 131, an ihrer der jeweiligen Verzahnung 130a gegenüberliegenden Stirnseite die erwähnte Stecköffnung 145 auf, in die anschließend oder vor der einschnappenden Fixierung eines Getriebegliedes 29,31 eine entsprechende Welle 13 mit passendem Durchmesser und Umrissform eingesteckt werden kann. Dadurch wird also ein Steck-Kupplungsbereich 21 geschaffen.

Um eine drehfeste Verbindung zu ermöglichen, ist im gezeigten Ausführungsbeispiel die jeweilige Welle 13 im Durchmesser n-polygonal gebildet, im gezeigten Ausführungsbeispiel als regelmäßiges Sechseck ausgebildet (Figur 7). Der entsprechende Querschnitt der Stecköffnung 145 in dem Wellenverbindungsabschnitt 143, also im so gebildeten Steck-Kupplungsbereich 21 ist identisch, so dass eine entsprechende Welle 13 nur in der passenden Länge zurechtgeschnitten und dann ebenfalls ohne Werkzeug mit einem Getriebeglied 129 durch Einstecken in die Einstecköffnung 145 drehfest verbunden werden kann.

Mit einem derartigen Aufbau kann also problemlos der in Figur 1 gezeigte Antriebsstrang hergestellt werden, indem beispielsweise das erste Umlenkgetriebe 11.1 in Form des Kegelradgetriebes 11' ohne Verwendung von Werkzeug durch Eindrücken von Kegelrädern hergestellt und beispielsweise anschließend mit der ersten Welle 13.1 (die nach außen führt) und mit der zweiten Welle 13.2 in entsprechender Länge an den beiden Kegelrädern eingesteckt wird.

Anschließend kann das in Figur 1 identisch aufgebaute zweite Umlenkgetriebe 11.2 in Form des Kegelradgetriebes 11' hergestellt werden, wobei hier der eine Verbindung zum ersten Kegelradgetriebe 11.1 herstellende Wellenabschnitt 13.2 vorher in die betreffende Stecköffnung 145 des Kegelrades 129 des zweiten Getriebes eingesteckt werden kann, bevor das gesamte zweite Kegelradgetriebe 11 mit seinem Getriebe-Basismodul 113, das heißt seiner Getriebe-Lagerplatte 115 und den daran ausgebildeten Rastfingern 35 in entsprechende Öffnungen im Boden 5 eingesteckt und verankert wird. Möglich ist aber genauso, dass beispielsweise der zweite Wellenstrang 13.2 mit den beiden gegenüberliegenden am Ende vorgesehenen Kegelrädern verbunden wird, um dann diesen Getriebestrang mit den beiden Kegelrädern in die beiden vormontierten Getriebe-Basismodule 113 einzuklipsen.

In einem entsprechenden Schritt wird auch dann das nächste dritte Umlenkgetriebe 11 in Form eines Winkelgetriebes 11' in Figur 1 eingebaut. Da die Wellen eine gewisse Elastizität aufweisen, wäre es hier auch möglich, das zweite Kegelgetriebe vollständig einzubauen, dort die dritte Wellenachse 13.3 bereits mit dem ausgehenden Kegelrad durch Einstecken in die Stecköffnung 145 drehfest zu verbinden, das vollständige dritte Getriebe-Basismodul 113 ebenfalls auf der Bodenplatte durch Einstecken rastend zu verankern, um dann erst nach Aufsetzen des Kegelrades auf das gegenüberliegende Ende des dritten Wellenabschnittes dieses Kegelrades mit aufgesteckter Welle von oben her in das Getriebe-Basismodul 113 einzudrücken. Anschließend kann das zweite hier als Ausgangskegelrad dienende Kegelrad 131 ebenfalls mit oder ohne voreingesteckter Welle eingepresst werden, wobei am Schluss die Gehäuseabdeckung aufgesetzt werden kann.

Die erläuterten modularen Bestandteile der modularen Verstelleinrichtung für HF-Geräte umfassen entsprechend den bisher erläuterten Ausführungsbeispielen also ein Kegelradgetriebe, welches aus einer Lagerplatte und bevorzugt aus zwei gleichen Kegelrädern bestehen kann, wobei das Getriebe-Basismodul 113, das heißt die Getriebe-Lagerplatte 115, vier Schnapphaken, nämlich jeweils zwei Paar von Schnapphaken 117 für die Kegelradaufnahme, das heißt die Lagerwelle 133, umfasst, wobei jeweils an einem Paar von zusammenwirkenden Schnappfingern oder Schnapphaken 117 die Gleitlagerflächen 123" für die zusammenwirkenden Getriebeglieder 17, das heißt im gezeigten Ausführungsbeispiel für die bevorzugt gleich ausgebildeten Getriebeglieder 29, 31 in Form der Kegelräder 129, 131, ausgebildet sind. Ferner sind zwei gekröpfte Schnapphaken 35 für die Befestigung des Getriebe-Basismoduls 113, also der Getriebe-Lagerplatte 115 an einer Wand oder einem Boden, beispielsweise an einem Reflektor einer Antenne, vorgesehen.

Wie erwähnt, weist jedes Getriebeglied, also jedes Kegelrad, eine Lagerwelle 133 sowie zwei axiale Anschläge 137, 139 auf, die mit den entsprechend in axialer Richtung versetzt liegenden Begrenzungen oder Anschlägen 117a, 117b der Schnapphaken 117 zusammenwirken und die betreffenden Getriebeglieder 17, das heißt 29 bzw. 31, in Axialrichtung unverschieblich oder nur mit geringem Spiel verschieblich halten. Dabei sind die Schnapphaken für die Kegelradaufnahme so dimensioniert, dass sie auch bei Drehmomentübertragung nicht versagen.

Wie erwähnt, erweist sich als großer Vorteil, dass sowohl das erste wie auch das zweite Getriebeglied 29, 31, insbesondere also die Kegelräder 129, 131 nacheinander oder gleichzeitig in den Lagerbock 115 mit Handkraft, ohne Werkzeug, eingedrückt werden können. Dabei können die Kegelradgetriebe als Baugruppe vormontiert und dann an einer Tragplatte oder einem Boden 5 mit Hand montiert werden, oder umgekehrt. Geringe Winkelfehler der Wellen, beispielsweise bis zu 5°, zumindest bis zu 4°, 3°, 2° oder 1° werden durch die Schnapphaken 117 problemlos ausgeglichen, zumal die gesamten verwendeten Bauteile aus Kunststoff, das heißt vor allem nicht aus Metall oder Metallverbindungen, bestehen (gegebenenfalls aus glasfaserverstärktem Kunststoff bestehen oder diese umfassen, wie nachfolgend noch erörtert wird).

Das erläuterte Ausführungsbeispiel ist anhand von gerade verzahnten identisch ausgebildeten Kegelrädern erläutert worden. Genauso könnten aber auch anstelle der gerade verzahnten Kegelräder schräg verzahnte Kegelräder oder bogenverzahnte Kegelräder verwendet werden. Dabei könnte auch - vor allem dann, wenn eine Übersetzung gewünscht wird - beispielsweise ein Kegelradgetriebe mit vergleichbarem Aufbau vorgesehen sein, und zwar mit einem in der Regel kleiner dimensionierten Ritzel, welches mit einem demgegenüber größer dimensionierten Tellerrad zusammenwirkt. In allen Fällen kann eine vergleichbare Schnapp- und Rasteinrichtung zur Verankerung, Halterung und axialen Fixierung eines entsprechenden Getriebegliedes vorgesehen sein. Schließlich könnten sogar die beiden, jeweils zusammenwirkenden Getriebeglieder 17 nach Art von ineinandergreifenden Kronenrädern ausgebildet sein, nämlich unter Bildung eines sogenannten Kronenradgetriebes, also einer speziellen Form eines Umlenkgetriebes. Bekanntermaßen ist bei einem Kronenradgetriebe das eine Getriebeteil so ausgestaltet, dass auf einer Seite des Getrieberades Zähne ausgebildet sind, die das betreffende Getrieberad wie eine Krone aussehen lassen.

Nachfolgend wird nochmals auf die bereits erwähnte Welle eingegangen, wie sie in Figur 7 beispielhaft gezeigt ist.

Bei der verwendeten Welle 13 oder den Wellenabschnitten 13.1 bis 13.4 kann es sich um ein Bauteil handeln, welches aus einem glasfaserverstärktem Kunststoff (beispielsweise mit einem Glasgehalt größer als 50%, insbesondere größer als 60%, 70% und insbesondere größer als 80%) mit hexagonalem Querschnitt bestehen kann. Damit diese Welle eine hohe Torsionssteifigkeit aufweist, kann sie neben den glasfaserverstärkten Bestandteilen, die beispielsweise im Inneren, das heißt im mittleren Bereich der Welle 11 in Axialrichtung verlaufend vorgesehen sind, im äußeren Wellen-Materialbereich ein Glasgewebegeflecht aufweisen, welches die Drehfestigkeit erzeugt. Mit anderen Worten sind also in der Mitte die undirektionalen Fasern und außen die die Torsionssteifigkeit bewirkenden Gewebefasern angeordnet. Dadurch weist die Welle durch diesen spezifischen Aufbau auch eine gute Elastizität einerseits, aber nur eine geringe Relaxationsneigung andererseits auf.

Dies ermöglicht, dass die Welle 13 auch im gewissen Maße gebogen werden kann, um sie als biegsame Welle einzusetzen. Mit dieser Welle können also gewisse Biegeradien realisiert werden. Dies ermöglich auch den Ausgleich von nicht fluchtend liegenden Getriebeelementen oder dem Ausgleich von Höhenunterschieden.

Da die bisher beschriebenen, wie auch die nachfolgend noch erläuterten Getriebeglieder 17 und vor allem auch die Wellen und Wellenabschnitte aus Kunststoff, bzw. glasfaserverstärktem Kunststoff bestehen, ergibt sich insgesamt ein intermodulationsfester Aufbau nicht nur bezüglich der biegsamen und flexiblen Welle 13, sondern auch bezüglich der verwendeten Getriebeanordnungen 11.

Da die Getriebeglieder, das heißt die bisher erwähnten Kegelräder, wie auch die nachfolgend noch erwähnten Getriebeglieder in Form von Schnecken oder Schneckenrädern über geringfügig größer dimensionierte Stecköffnungen 145 als die Außenkontur oder der Außendurchmesser der Welle 13 verfügen, können die Wellen problemlos in diese Steckaufnahmeöffnungen 145 eingesteckt werden, um eine sichere Drehmomentübertragung durch die unrunde Außenform, hier durch die Sechskantform, zu gewährleisten.

Dies ermöglicht auch eine kostengünstige Fertigung der Welle 13 als Endlosmaterial. Bei Realisierung eines entsprechenden Antriebsstranges müssen die benötigten Wellen und Wellenabschnitte nur auf die richtige Länge geschnitten werden. Die Verwendung zusätzlicher Formelemente an den Wellenenden oder Kupplungen ist nicht erforderlich. Die Einstecktiefe der Wellen und Wellenabschnitte 11 in den Steckaufnahmen 145 der Getriebeglieder 17, insbesondere der erwähnten Kegelräder und der nachfolgend noch erläuterten Getriebeschnecke oder Schneckenrädern, kann so dimensioniert werden, dass auch bei Extremtemperaturen und den dadurch bedingten unterschiedlichen Längenausdehnungen stets eine zuverlässige Drehmomentübertragung erfolgen kann. Denn relative Längenänderungen der Wellen und Wellenabschnitte bezüglich der Bodenplatte 5 werden durch den Überlappungsbereich in dem Einsteckende 145 der jeweiligen Getriebeglieder ausgeglichen.

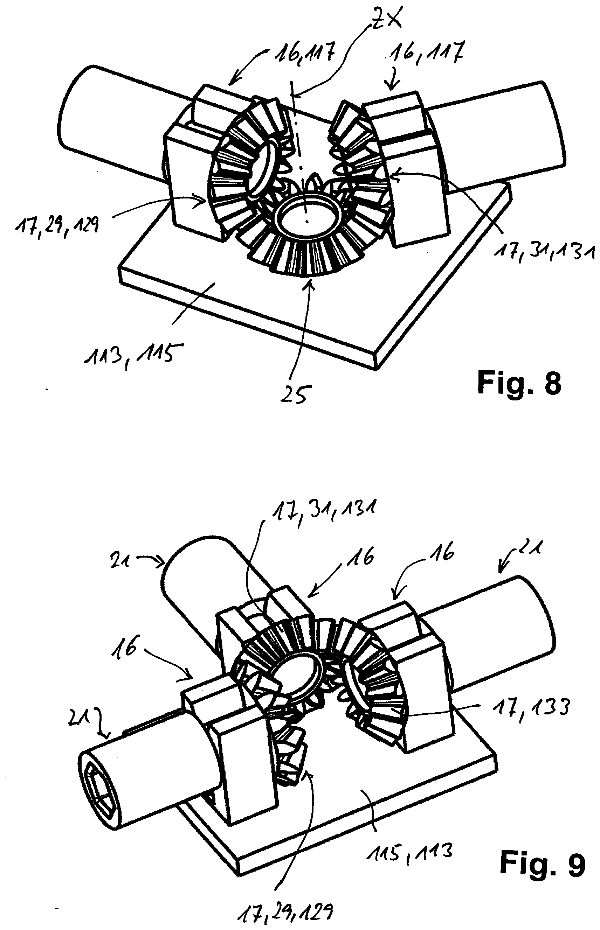

Anhand von Figur 8 ist nur schematisch gezeigt, dass auch Getriebe-Lagerplatten 115 eingesetzt werden können, bei denen die entsprechenden Schnapp- und Rasteinrichtungen 16 nicht im 90°-Winkel zueinander ausgerichtet sind, sondern in einem beliebigen, vorgebbaren benötigten Winkel.

Wie bei derartigen Getriebeanordnungen an sich bekannt, kann das eingangs- und ausgangsseite Kegelrad in einer in Draufsicht beliebigen Winkelausrichtung zueinander angeordnet sein, wobei für die Drehverbindung ein zu der Eingangs- und Ausgangswelle senkrecht stehendes Zwischen-Kegelrad 25 verwendet wird, das beispielsweise mit seiner Welle in einer Bodenplatte in einer entsprechenden Lochausnehmung gelagert sein kann (wobei dieses Kegelrad auf der Rückseite der in Figur 8 gezeigten Lagerplatte 115 gesichert sein kann, beispielsweise auch durch eine Schnapp- oder Rastverbindung).

Nur der Vollständigkeit halber wird erwähnt, dass beispielsweise die zweite Schnapp- oder Rasteinrichtung 16 unter Fixierung des zweiten Getriebegliedes 31 in Form des zweiten Kegelrades 131 auch mittels einer um die Zwischenachse ZX (die der zentralen Drehachse des Zwischen-Kegelrades 25 entspricht) konzentrisch zu dem Zwischen-Kegelrad 25 verschwenkbaren Anordnung montiert sein kann. Es ist auch vorteilhaft, an der Getriebe-Lagerplatte mehrere Schnappeinrichtungen für das Abtriebs-Kegelrad anzuformen, von denen eine ausgewählt werden kann.

Man kann bei diesem Aufbau die vorhandenen 90°-Kegelräder verwenden, um einen beliebigen Abtriebswinkel zu realisieren. Es ist lediglich eine neue Getriebe-Lagerplatte erforderlich. Man benötigt aber für das modulare System keine weiteren Kegelräder mit anderem Achswinkel. Dies reduziert die Teilevielfalt und bringt enorme Kostenvorteile, da Spritzgusswerkzeuge für Getriebe-Lagerplatten im Vergleich zu Spritzgusswerkzeugen für Kegelrad-Verzahnungen viel kostengünstiger sind.

Anhand von Figur 9 ist gezeigt, wie eine Drehrichtungsumkehreinrichtung unter Verwendung der erläuterten Getriebeglieder 29 beispielsweise in Form des ersten und zweiten Kegelrades 129, 131 aussehen kann.

Figur 9 zeigt dabei auch, wie eine Antriebsstrang-Verzweigung mit den erfindungsgemäß ausgebildeten Getriebegliedern und den zugehörigen Getriebe-Basismodul-Aufbauten 113 aussehen kann.

Bei der Variante gemäß Figur 9 sind beispielsweise zwei anhand der vorausgegangenen Ausführungsbeispiele erläuterte 90°-Winkel-Kegelradgetriebe zusammengebaut, wobei identische Kegelräder verwendet werden, deren Lagerwellen 133 mit ihren Axialanschlägen in die entsprechenden Schnappeinrichtungen 16 eingedrückt werden. Dabei kämmen dann die Winkelverzahnungen des ersten und zweiten Kegelrades 129, 131 miteinander sowie die Winkelverzahnungen des zweiten und dritten Kegelrades 131, 133. Wird beispielsweise über das in Figur 9 linke Kegelrad 129 eine entsprechende Rotationsbewegung über eine hier nicht näher gezeigte Welle 13 eingeleitet, wird darüber auch zwangsweise das in Figur 9 gezeigte mittlere Kegelrad 131 mit der zugehörigen dort einsteckbaren Welle sowie das in Figur 9 rechts liegende Kegelrad 133 in Rotation versetzt und darüber auch die in ihrem Steck-Kupplungsbereich 21 eingesteckten (allerdings in Figur 9 nicht näher gezeigten) Wellenabschnitte 13.

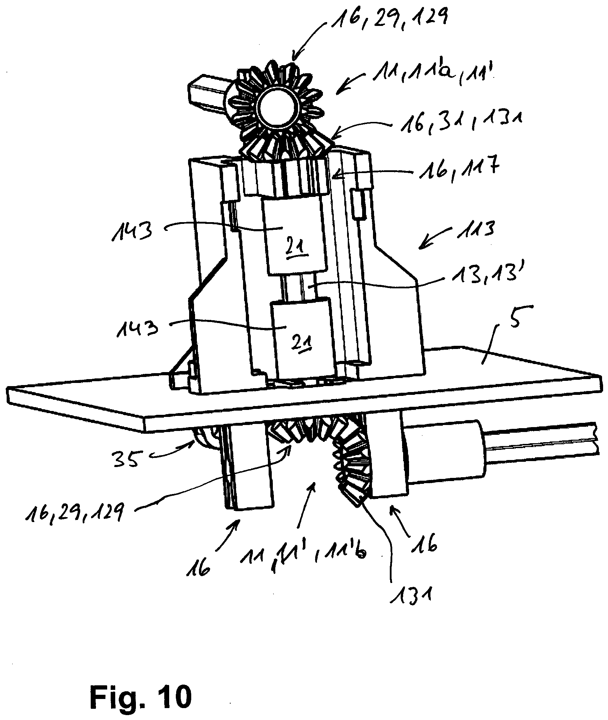

Anhand von Figur 10 ist ein abgewandeltes Ausführungsbeispiel bezüglich eines Getriebe-Basismoduls 113 gezeigt, wie es insbesondere dann eingesetzt werden kann, wenn eine Antriebsverbindung von einer Seite einer Bodenplatte eines Reflektors zu einer gegenüberliegenden Seite erfolgen soll.

Dabei stellt Figur 10 letztendlich nichts anderes dar, als zwei in engem Abstand zueinander angeordnete und damit aufeinanderfolgende Winkelgetriebe, das heißt aufeinanderfolgende Kegelradgetriebe 11'.

Das in Figur 10 oben liegende Kegelradgetriebe 11'a umfasst also zwei wie bisher geschilderte miteinander in Wirkverbindung stehende Kegelräder 129, 131, wobei die Halterung und Verankerung für das erste Kegelrad 129 in Figur 10 nicht näher gezeigt ist. Das damit kämmende zweite Kegelrad 131 ist mit einer der erläuterten Schnapp- und Rasteinrichtungen 16 unter Verwendung von sogenannten Schnappfingern 117 axial unverschieblich aber frei rotierbar gehalten.

Eine zweite Kegelradgetriebe-Anordnung 11', das heißt 11'b ist auf der unteren Seite der Bodenplatte ausgebildet, wobei das um die Vertikalachse drehende und mit seiner Verzahnung nach unten weisende Kegelrad 129 ebenfalls den erwähnten Wellen-Verbindungsabschnitt 143 unter Ausbildung eines Steck-Kupplungsbereiches 21 aufweist, so dass die beiden Steck-Kupplungsbereiche der beiden Kegelradgetriebe 11' in unmittelbar benachbarter Lage angeordnet und nur durch eine vergleichsweise kurze Zwischenwelle 13' miteinander verbunden sind.

Mit anderen Worten werden also die identisch ausgebildeten Kegelräder wie bisher erläutert verwendet, wobei lediglich das Getriebe-Basismodul 113 abgewandelt und ausgebildet ist, um nämlich beide aufeinander fallende Kegelradgetriebe zu fixieren und zu erhalten.

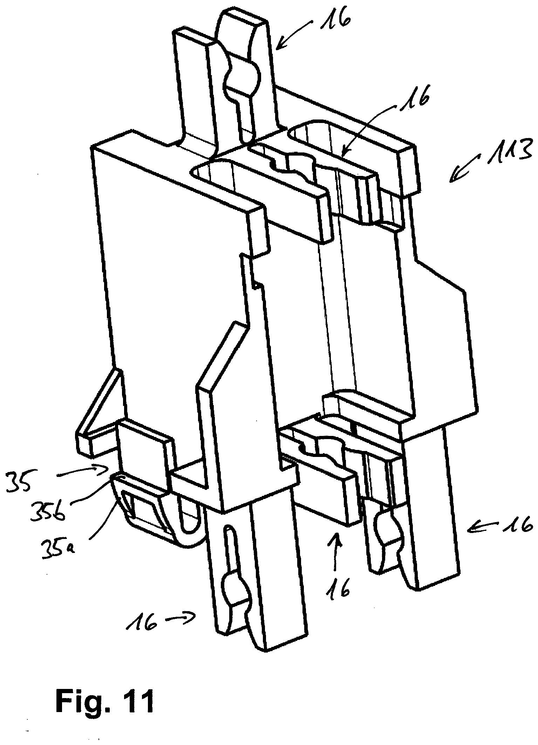

Die gesamte Getriebebasis-Modulanordnung 113 gemäß Figur 11 wird dabei ebenfalls wiederum durch entsprechende durch Ausnehmungen in dem Boden und der Bodenplatte 5 eingesteckte Rastfinger 35 gehalten.

Somit kann auch dieser Streckenabschnitt der gesamten Antriebsanordnung ohne jedes Werkzeug montiert werden.

In Figur 11 ist dabei das Getriebe-Basismodul 113 ohne die eingebauten Kegelräder gezeigt.

Aus der Darstellung gemäß Figuren 10 und 11 ist ferner zu ersehen, dass beispielsweise auf der Unterseite eines Bodens, einer Wand oder einer Bodenplatte 5, das heißt in der dort vorgesehenen Öffnung, durch die der Antriebsstrang 7 hindurchverläuft, zwei parallel zur Bodenplatte 5 versetzt liegende Schnapp- oder Rasteinrichtungen 16 vorgesehen sind. Bei dem Ausführungsbeispiel gemäß Figur 10 wird nur die rechts liegende Schnapp- und Rasteinrichtung 16 benötigt, da hier der Antriebsstrang über ein dort eingesetztes Kegelrad 131 nach rechts liegend verläuft. Bei Bedarf könnte dieses Kegelrad 131 aber auch genauso an der in Figur 10 links liegenden Schnapp- und Rasteinrichtung 16 verankert werden, um mit dem unmittelbar unterhalb der Bodenplatte 5 befindlichen Kegelrad 129 zu kämmen. In diesem Fall könnte der unterhalb der Bodenplatte 5 herzustellende Antriebsstrang abweichend von Figur 10 nach links weggeführt werden.

Weiterhin ist es auch möglich, beide unten liegende Schnappeinrichtungen 16 gleichzeitig zu nutzen und so das Drehmoment auf 2 Abtriebsstränge zu übertragen.

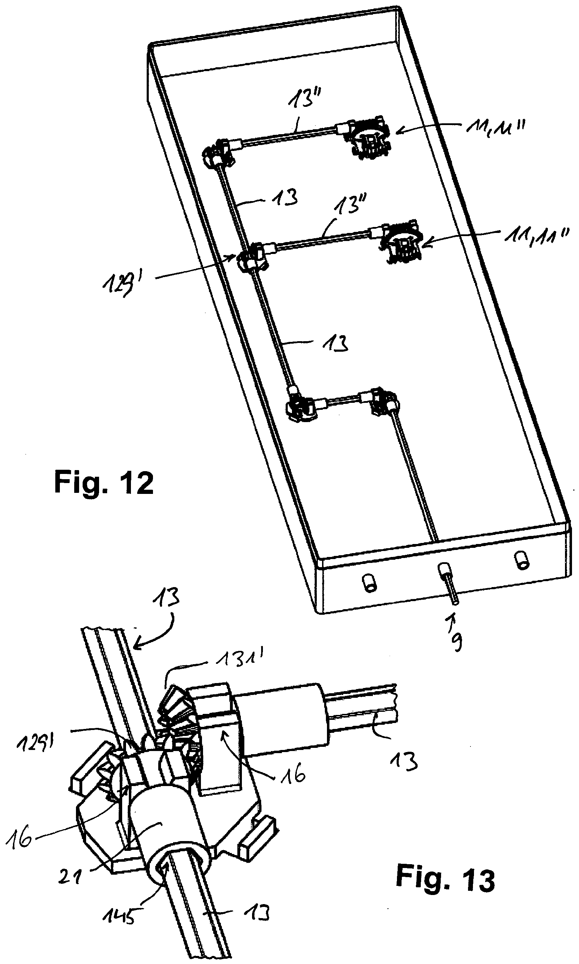

Anhand von Figuren 12 und 13 ist eine abgewandelte Ausführungsform insoweit gezeigt, als hier bei dem dritten Umlenk- oder Winkelgetriebe 11 ein Kegelrad verwendet wird, dessen Stecköffnung 145 nicht als Sacköffnung, sondern als durchgängige Öffnung ausgebildet ist. Somit kann hier die zugehörige, mit unrundem Querschnitt (beispielsweise nach Art eines regelmäßigen Sechsecks) ausgebildete Welle 13 durch dieses Kegelrad 129' hindurchgesteckt werden. Auch dadurch lässt sich eine zwangsweise Parallelansteuerung von der Antriebsseite 9 gewährleisten, bei der die beiden Abtriebswellen 13" bei Verwendung insgesamt einer gleichen Verzahnung für alle verwendeten Kegelräder zwangsweise mit gleichem Drehsinn und gleicher Drehgeschwindigkeit angetrieben werden. Letztlich muss die aufsteckbare Gehäusekappe noch eine weitere Bohrung oder Öffnung aufweisen, durch die die hindurchgesteckte Welle 13 wieder austreten kann.

Nur der Vollständigkeit halber wird erwähnt, dass das in Figur 13 dargestellte angetriebene Kegelrad 129' auch zwei in Axialrichtung voneinander getrennte Steck-Kupplungsbereiche 21 aufweisen kann, welche also in Axialrichtung jeweils von außen nach innen laufend zwei Stecköffnungen 145 umfassen, in die jeweils eine Welle 13 von beiden gegenüberliegenden, axial versetzt liegenden Stirnseiten aus in das betreffende Kegelrad 129' eingesteckt werden kann. In diesem Fall würde also die Welle 13 nicht einteilig durch das betreffende Kegelrad hindurch laufen.

Bereits anhand von Figur 1 ist gezeigt worden, dass das dortige letzte Getriebe 11 nicht in Form eines Umlenkgetriebes 11', sondern in Form eines Schraubwälzgetriebes 11", das heißt in Form eines Schneckengetriebes 11", ausgebildet ist.

Ein Schneckengetriebe umfasst bekanntermaßen eine Schnecke, die mit einer oder mehreren Schraubgängen versehen sein kann und mit einem schräg verzahnten Rad, das mit der Schnecke kämmt. Die Achsen der beiden Getriebeglieder sind häufig ebenfalls um 90° versetzt liegend ausgerichtet. Derartige Schneckengetriebe eignen sich vor allem dort, wo höhere Übersetzungen wünschenswert sind.

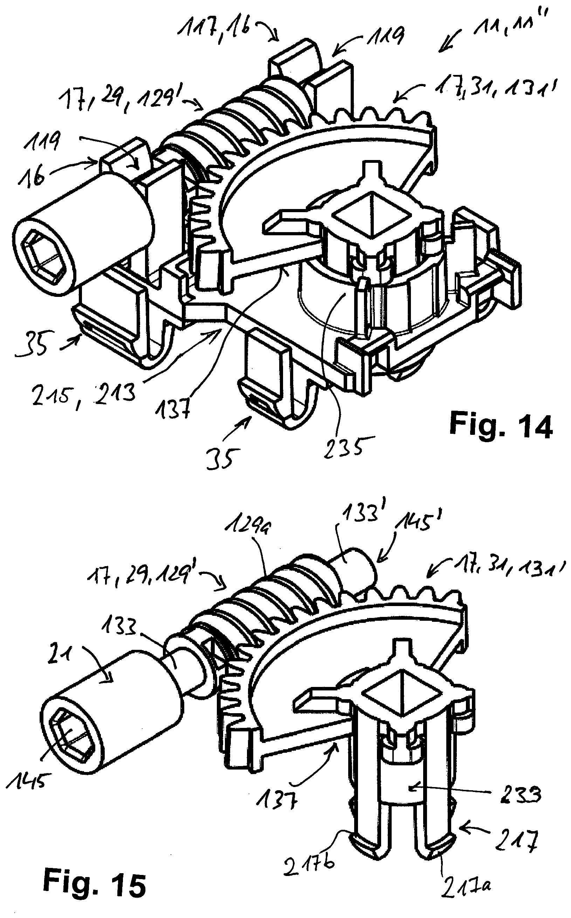

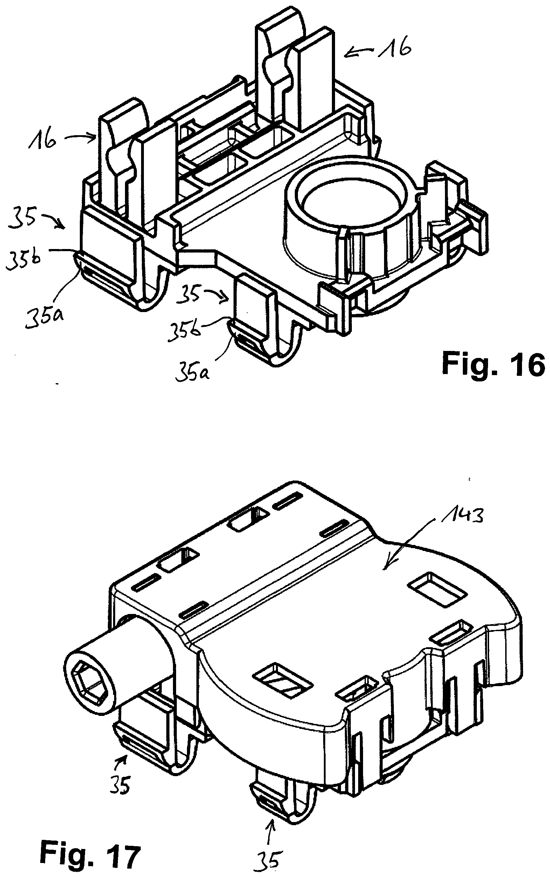

In den Figuren 14 bis 17 ist dabei dieses Schneckengetriebe 11" mit den beiden Getriebegliedern 29, 31 gezeigt, wobei das eine Getriebeglied 29, wie erwähnt in Form der Schnecke 129' und das zweite Getriebeglied 31 als Schneckenrad 131' ausgebildet ist. Wenn das Schneckenrad 131' nicht eine vollständige Drehung um seine Drehachse vollziehen muss, kann es auch als Teilrad oder Schneckenradsegment ausgebildet sein, wie in den Figuren 15 und 16 dargestellt ist.

Auch in diesem Ausführungsbeispiel ist das erste Getriebeglied 29 in Form der Getriebeschnecke 129' so ausgebildet, dass diese Schnecke wiederum eine erste Lagerwelle 133 aufweist, deren axiale Länge wiederum der Breite B der zugehörigen Schnappeinrichtung 16 mit den Schnappfingern 117 entspricht, so dass die Lagerwelle 133 hier wiederum in den zylinderförmigen Aufnahmeraum 123 der insoweit identisch gebildeten Schnappeinrichtung 16 eingesteckt werden kann.

Am gegenüberliegenden Ende auf die Schneckengänge 129a folgend ist ein verbleibender Wellenstummel oder Wellenabsatz 133' in eine insoweit identisch ausgebildete Schnappeinrichtung 16 unter Verwendung zweier Schnappfinger 117 einrastbar, das heißt einschnappbar. Eine zweite axiale Sicherung, die die so gebildete Schnecke gegen ein axiales Verschieben sichert, ist nicht notwendig. Es ist ausreichend, wenn die beiden im ersten Ausführungsbeispiel unter Verwendung von Kegelrädern entsprechenden Anschläge 137, 139 an einer Stelle des ersten Getriebegliedes 29, das heißt der Getriebeschnecke 129', vorgesehen sind.

Das damit kämmmende zweite Getriebeglied 31 in Form des Schneckenrades 131' weist ebenfalls eine Lagerwelle 233 auf, die in ihrer axialen Erstreckung durch die Rückseite des Schneckenrades 131' begrenzt ist, die den ersten Anschlag 137 bildet. Im axialen Abstand dazu versetzt liegend sind Schnappfinger 217 ausgebildet, die sich in Axialrichtung erstrecken und mit denen das Schneckenrad durch eine entsprechende zylinderförmige Ausnehmung in das Getriebe-Basismodul 213 nach Art einer Getriebe-Lagerplatte 215 eingesteckt werden kann, bis die in axialer Richtung vorstehende und mit radial nach außen weg ragenden Rastzapfen versehene Schnappeinrichtung die entsprechende hohlzylinderförmige Lagerausnehmung in dem Getriebe-Basismodul 213 hintergreift und dadurch die Welle 233 des Schneckenrades 131' sichert.

Mit anderen Worten kann auch dieses Getriebe oder Umlenkgetriebe 11" völlig ohne Verwendung von Werkzeugen montiert werden.

Auch in diesem Ausführungsbeispiel ist die Schnecke 129' an zumindest einer Anschlussseite mit einer axial ausgerichteten Stecköffnung 145 versehen, die als Steck-Kupplungsbereich 21 dient, in die eine entsprechende Welle 13, das heißt ein Wellenende, eingesteckt werden kann. Eine entsprechende Stecköffnung 145' ist auch an dem stirnseitigen Ende des Schneckenrades ausgebildet, um hier ebenfalls wiederum das Ende einer entsprechenden Welle 13 oder einer Welle der zu verstellenden Komponente einstecken zu können.

Wie erwähnt ist die eigentliche Schnecke 129' als erstes Getriebeglied 29 an zwei in axialer Längsrichtung der Schnecke versetzt liegenden Schnappeinrichtungen 16 gesichert. Der Axialabstand zwischen den beiden Schnappeinrichtungen 16 dient dabei zur Aufnahme der Gewindegänge 129a der eigentlichen Schnecke 129'. Die Ausbildung ist dabei derart, dass die in den Zeichnungen dargestellte Schnecke 129 auch um 180° verdreht in die beiden Schnappeinrichtungen 16 eingesetzt werden kann.

Die erwähnten Schnappfinger oder Rasthaken 217 stehen in diesem Ausführungsbeispiel in Axialrichtung der eigentlichen Lagerwelle 233 über diese weiter vor, sind mit keilförmig auflaufenden Flächen 217a und Hinterschneidungen 217b ausgebildet, so dass sie eine hohlzylinderförmige Aufnahme 235 (siehe Figur 14), die mit dem Boden und dem Lagerbock 213, 215 fest verbunden ist, an deren Unterseite hintergreifen, wodurch das Schneckenrad 131' gehalten ist. Das in den Figuren 15 und 16 gezeigte Getriebe-Basismodul 213 weist ebenfalls wieder zusätzlich im Querschnitt bevorzugt U-förmige Rasteinrichtungen oder Rastfinger 35 auf, im gezeigten Ausführungsbeispiel jeweils zwei Paare von derartigen Schnappfingern oder Rasteinrichtungen 35, um das so gebildete Getriebe-Basismodul 213 wiederum in einer entsprechenden Ausnehmung in einem Boden oder einer Wand 5 rastend verankern zu können.

Die Schnapphaken 217 zur axialen Lagesicherung des Schneckenrades 131' können auch am Getriebe-Basismodul 213 ausgebildet sein. Das Schneckenrad muss dann nur eine entsprechende umlaufende Nut aufweisen, in die Schnapphaken 217 eingreifen können.

Schließlich ist in Figur 17 ebenfalls noch gezeigt, dass auch bei dem Schneckengetriebe auf das Getriebe-Basismodul 213 (beispielsweise in Form der Getriebe-Lagerplatte 215) ein Gehäusedeckel 143 lösbar aufgesetzt und dabei verrastet werden kann. Die funktionelle Ausbildung dieses anhand von Figur 17 gezeigten Gehäusedeckels 143 ist dabei mit dem anhand von Figuren 6 und 7 gezeigten Gehäusedeckel 143 vergleichbar, der in dem dortigen Ausführungsbeispiel zur Abdeckung eines Kegelradgetriebes 11' und nicht zur Abdeckung eines Schneckenradgetriebes 11" beschrieben wurde.

Zusammenfassend kann also bezüglich des Umlenkgetriebes 11 in Form des Schneckengetriebes 11" festgehalten werden, dass eine bevorzugte Ausführungsform beispielsweise ebenfalls ein Getriebe-Basismodul 213, gegebenenfalls in Form einer Getriebe-Lagerplatte 215 umfasst, an der bevorzugt mehrere, beispielsweise acht Schnappfinger oder Schnapphaken ausgebildet sind, nämlich beispielsweise vier Schnapphaken (nämlich zwei Paar von Schnapphaken) zur Fixierung und Halterung der Schneckenaufnahme, wobei jeweils zwei paarweise gegenüber stehende und an den Schnapphaken ausgebildete Gleitlagerflächen für die Schnecke ausgeformt sind. Ferner sind beispielsweise weiterhin vier zusätzliche gekröpfte Schnapphaken zur Befestigung des Getriebe-Basismoduls 213, das heißt der Getriebe-Lagerplatte 215 an oder in einer Trägerplatte, einer Leiterplatte, einer Wand, einem Boden etc. vorgesehen. Am Schneckenrad selbst können ebenfalls wie erläutert, ein, zwei oder beispielsweise drei bzw. bevorzugt vier Schnapphaken angeformt sein, um das Schneckenrad im Lagerbock in einer entsprechend hohlzylinderförmigen Aufnahme frei drehbar zu positionieren, aber gegen axiales Verschieben, Entfernen oder Verlieren zu sichern. Beim erläuterten Ausführungsbeispiel kann bevorzugt die erwähnte Schnecke auch um 180° verdreht montiert werden, so dass eine Momentübertragung von der anderen Seite her ebenfalls möglich ist.

Überhaupt zeichnet sich die gesamte mobile Ausbildung eines Antriebsstranges dadurch aus, dass die einzelnen Teile ohne Werkzeuge montiert und demontiert werden können, die gesamte Anordnung also insoweit lösbar ist. Lediglich die einzelnen Antriebsstränge müssen in der geeigneten Länge bereitgestellt werden, beispielsweise durch Abtrennen oder Absägen entsprechender Wellenabschnitte. Dadurch ergibt sich ein insgesamt modulares System zur Realisierung unterschiedlichster, bevorzugt intermodulationsfester Antriebsstränge für eine Verstelleinrichtung, insbesondere für HF-Geräte. In diesem Baukastensystem können somit mit mehrfach einsetzbaren Kegelradgetrieben, mit Schneckenradgetrieben usw. sowie verschieden langen Wellen beliebig in einem Gerät angeordnete Komponenten verstellt werden.

Dabei sind auch unterschiedliche Ausführungsvarianten zu den erläuterten Ausführungsbeispielen denkbar.

Möglich ist beispielsweise ferner, dass für die verschiedenen Getriebestufen jeweils eine Schutzabdeckung in Form eines Deckels (siehe Figuren 7 und 17) vorgesehen ist. Dadurch wird die jeweilige Getriebeanordnung vor Verschmutzung geschützt und eine Lagesicherung für die Getriebeelemente sowie für die Schnapphaken z.B. an einem Reflektor geschaffen. Im Übrigen können auch in dem entsprechenden Deckel und/oder in der Getriebe-Lagerplatte kleinere Ausnehmungen eingebracht sein, um beispielsweise zumindest mit einem Werkzeug (Schraubendreher) die Rasteinrichtungen zum Öffnen des Deckels zu lösen.

Möglich ist in den erläuterten Ausführungsbeispielen ebenfalls, dass eine Drehmomenteinleitung durch eine Wand, beispielsweise einem Reflektorblech hindurch, erfolgt, beispielsweise mittels einer doppelt ausgebildeten Kegelradstufe. Dabei kann ein einteiliger Lagerbock, das heißt ein einteiliges Getriebe-Basismodul bevorzugt eingesetzt werden.

Die erläuterten Ausführungsbeispiele haben dabei ferner gezeigt, dass gleichzeitig auch zwei oder noch mehr Komponenten durch entsprechende Verzweigungen angetrieben werden können. Ebenso können von einer 90° Winkelausrichtung abweichende Winkel für die Antriebsstränge unter Verwendung spezieller Lagerplatten realisiert werden. Es sind selbst Lagerplatten, das heißt Getriebe-Lagerplatten 115 möglich, mit denen eine stufenlose Winkeleinstellung und Winkelverstellung für die Abtriebswelle umgesetzt werden kann.

## Patentansprüche

1. Modulare Verstelleinrichtung für HF-Geräte, mit folgenden Merkmalen:
- mit zumindest einem Antriebsstrang (7) mit zumindest einem Getriebe (11; 11', 11") und mit zumindest einer rotierbaren Welle (13) oder einem rotierbaren Wellenabschnitt (13.1, 13.2, 13.3, 13.4),
- das zumindest eine Getriebe (11; 11', 11") umfasst zumindest zwei rotierbare Getriebeglieder (17), nämlich zumindest ein erstes und ein zweites Getriebeglied (29, 31), die in Wirkverbindung miteinander stehen oder miteinander kämmen,
- die zumindest beiden rotierbaren Getriebeglieder (17; 29, 31) sind in oder an einem Getriebe-Basismodul (113) gehalten,
- das zumindest eine Getriebe-Basismodul (113) weist für das erste Getriebeglied (29) eine zugehörige Schnapp- und/oder Rasteinrichtung (16) auf,
- das erste Getriebeglied (29) ist durch die zugehörige Schnapp- und/oder Rasteinrichtung (16) einschnappend und dabei rotierbar gehalten und gesichert, und
- die Schnapp- und/oder Rasteinrichtung (16) ist so ausgebildet, dass das erste Getriebeglied (29, 31) in Axialrichtung (X) anschlagsbegrenzt gehalten ist,
- das zumindest eine Getriebe-Basismodul (113) weist für das zweite Getriebeglied (31) ferner eine zugehörige Schnapp- und/oder Rasteinrichtung (16) auf,
- das zumindest eine zweite Getriebeglied (31) ist durch die zugehörige Schnapp- und/oder Rasteinrichtung (16) einschnappend und dabei rotierbar gehalten und gesichert,
- die Schnapp- und/oder Rasteinrichtung (16) zum Halten und Sichern des zumindest einen zweiten Getriebegliedes (31) ist so ausgebildet, dass das zumindest eine zweite Getriebeglied (31) in Axialrichtung (X) anschlagsbegrenzt gehalten ist, und
- das erste und das zweite rotierbare Getriebeglied (29, 31) weisen jeweils einen Steck-Kupplungsbereich (21) auf, in welchem jeweils eine der Wellen (13) oder einer der Wellenabschnitte (13.1, 13.2, 13.3, 13.4) mittels einer Steckverbindung drehfest mit dem ersten bzw. mit dem zweiten rotierbaren Getriebeglied (29, 31) drehfest verbunden ist.

2. Verstelleinrichtung nach Anspruch 1, **dadurch gekennzeichnet, dass** die zumindest eine Getriebeanordnung (11) aus einem Umlenkgetriebe oder aus einem Kegelradgetriebe (11') oder einem Schneckenradgetriebe (11") besteht.

3. Verstelleinrichtung nach Anspruch 1 oder 2, **dadurch gekennzeichnet, dass** das Umlenkgetriebe (11) als Übersetzungsgetriebe ausgebildet ist.

4. Verstelleinrichtung nach einem der Ansprüche 1 bis 3, **dadurch gekennzeichnet, dass** an dem Getriebe-Basismodul (113) oder an dem in Form einer Getriebe-Lagerplatte (115) ausgebildeten Getriebe-Basismodul (113) zumindest eine Rasteinrichtung (151) ausgebildet ist oder zwei versetzte Rasteinrichtungen (151) ausgebildet sind, in welche eine das Getriebe (11; 11', 11") überdeckende Getriebe-Gehäuseabdeckung (143) lösbar verrastet ist, worüber die zumindest beiden miteinander in Wirkverbindung stehenden Getriebeglieder (29, 31) überdeckt und geschützt und die Schnappeinrichtungen (16) vorzugsweise lagegesichert sind.

5. Verstelleinrichtung nach einem der Ansprüche 1 bis 4, **dadurch gekennzeichnet, dass** die Welle (13) und/oder die Wellenabschnitte (13.1, 13.2, 13.3, 13.4) aus Kunststoff oder aus glasfaserverstärktem Kunststoff bestehen, wobei der Glasfaseranteil an der Welle (13) oder dem Wellenabschnitt (13.1, 13.2, 13.3, 13.4) mehr als 50%, insbesondere mehr als 60%, 70%, 80% und mehr als 90% beträgt.

6. Verstelleinrichtung nach Anspruch 5, **dadurch gekennzeichnet, dass** die Welle (13) und/oder die Wellenabschnitte (13.1, 13.2, 13.3, 13.4) im axial verlaufenden mittleren Bereich überwiegend unidirektionale Fasern und in dem Umfangsmantelbereich, der weniger als 25% oder weniger als 20%, 15% oder 10% des Durchmessers der Welle (13) oder der Wellenabschnitte (13.1, 13.2, 13.3, 13.4) beträgt, ein Glasfasergewebegeflecht umfasst.

7. Verstelleinrichtung nach einem der Ansprüche 1 bis 6, **dadurch gekennzeichnet, dass** der Antriebsstrang (7) intermodulationsfest aufgebaut ist und das Getriebe-Basismodul (113) und/oder die Getriebeglieder (17; 29, 31) und/oder die Welle (13) und/oder die Wellenabschnitte (13.1, 13.2, 13.3, 13.4) aus Kunststoff bestehen und/oder Kunststoff umfassen oder aus metallfrei ausgebildetem Kunststoff bestehen.

8. Verstelleinrichtung nach einem der Ansprüche 1 bis 7, **dadurch gekennzeichnet, dass** die Getriebeglieder (29, 31) einen Steck-Kupplungsbereich (21) umfassen, in welchen die Welle (13) oder ein Ende der Welle (13) oder eines Wellenabschnittes (13.1, 13.2, 13.3, 13.4) einsteckbar und axial verschieblich gehalten ist, worüber eine drehfeste Verbindung zwischen der Welle (13) oder einem Wellenabschnitt (13.1, 13.2, 13.3, 13.4) und dem damit verbundenen Getriebeglied (29, 31) hergestellt ist, wozu der Querschnitt der Welle (13) oder der Wellenabschnitt (13.1, 13.2, 13.3, 13.4) und die Stecköffnung (145) des Steck-Kupplungsbereiches (21) eine unrunde Querschnittsform oder eine n-polygonale Querschnittsform oder eine n-polygonale Querschnittsform in Form eines regelmäßigen n-Polygonals aufweisen, wobei n entweder eine natürliche Zahl größer 2 oder n eine natürliche Zahl zwischen 2 und 11 ist.

9. Verstelleinrichtung nach einem der Ansprüche 1 bis 8, **dadurch gekennzeichnet, dass** das Getriebe-Basismodul (113) zumindest eine und vorzugsweise zwei versetzt zueinander angeordnete Rasteinrichtungen (35) umfasst, mittels derer das Getriebe-Basismodul (113) in einem Boden, einer Wand oder einer Platte durch Einstecken der Rasteinrichtung (35) in entsprechende Ausnehmungen in der Wand, dem Boden oder der Platte verrastbar ist.

10. Verstelleinrichtung nach einem der Ansprüche 1 bis 9, **dadurch gekennzeichnet, dass** die Schnappeinrichtung (16) Schnappfinger oder Schnapphaken (117) umfasst, die paarweise zusammenwirken und sich von dem Getriebe-Basismodul (113) unter Ausbildung eines Trennspaltes (119) erheben, wobei im Bereich des Trennspaltes eine die Breite des Trennspaltes (119) überragende zylinderförmige oder zylinderähnliche Ausnehmung (123) gebildet ist, in welche eine Lagerwelle (133), die an dem Getriebeglied (29, 31) ausgebildet ist, einrastbar ist.

11. Verstelleinrichtung nach Anspruch 10, **dadurch gekennzeichnet, dass** die axiale Länge (135) der Lagerwelle (133) durch zwei in Axialrichtung (X) versetzt liegende Anschläge (137, 139) begrenzt ist, wobei die Länge (135) der Lagerwelle (133) der Breite (B) der Schnappfinger und/oder -haken (117) der Schnappeinrichtung (16) entspricht oder geringfügig größer ist, zumindest um 0,1% oder um mehr als 0,2%, 0,3%, 0,4%, 0,5%, 1% oder 1,5% größer ist als die Breite (B) der Schnappfinger und/oder -haken (117).

12. Verstelleinrichtung nach Anspruch 11, **dadurch gekennzeichnet, dass** der Abstand zwischen den Anschlägen (137, 139) um weniger als 5% oder weniger als 4%, 3,%, 2%, 0,5%, 0,4%, 0,3%, 0,2% oder 0,1% länger ist als die Breite (B) der Schnappfinger und/oder -haken (117).

13. Verstelleinrichtung nach Anspruch 11 oder 12, **dadurch gekennzeichnet, dass** der eine Anschlag (137) durch die Rückseite des Kegelrades (129, 131) und der gegenüberliegende Anschlag (139) durch einen über die Lagerwelle (133) radial vorstehenden Schulteransatz (141) ausgebildet ist, über welchen die Lagerwelle (133) in den Steck-Kupplungsbereich (21) übergeht.

14. Verstelleinrichtung nach einem der Ansprüche 1 bis 13, **dadurch gekennzeichnet, dass** das zumindest eine Getriebe (11) in Form eines Kegelradgetriebes (11') zwei gleiche, miteinander kämmende Kegelräder (129, 131) oder ein Ritzel und ein damit kämmendes Tellerrad (131') oder miteinander kämmende Kronenräder umfasst.

15. Verstelleinrichtung nach einem der Ansprüche 1 bis 14, **dadurch gekennzeichnet, dass** die zumindest beiden Getriebeglieder (29, 31) unter Zwischenschaltung eines dritten Getriebegliedes (25) in einer von einer 90° abweichenden Winkelverbindung in Triebverbindung stehen.

16. Verstelleinrichtung nach einem der Ansprüche 1 bis 15, **dadurch gekennzeichnet, dass** zumindest drei Kegelräder (129, 131, 133) an dem Getriebe-Basismodul (113) mittels jeweils einer Schnappeinrichtung (16) gehalten sind, wobei die drei Kegelräder (129, 131, 133) jeweils in Draufsicht um 90° versetzt zueinander liegend angeordnet sind, so dass das erste Kegelrad (129) mit dem zweiten Kegelrad (131) und das zweite Kegelrad (131) mit dem dritten Kegelrad (133) kämmt, wobei zumindest das erste und das dritte Kegelrad (129, 131) mit einer der Achsen (13) oder einem der Achsabschnitte (13.1, 13.2, 13.3, 13.4) in drehfester Verbindung steht.

17. Verstelleinrichtung nach einem der Ansprüche 1 bis 16, **dadurch gekennzeichnet, dass** das Getriebe-Basismodul (113) so ausgebildet ist, dass mehrere Abtriebswinkel realisiert werden können, indem mehrere Schnappeinrichtungen (16) für das Abtriebs-Zahnrad vorgesehen sind oder dass die Position der Schnappeinrichtung (16) für das Abtriebs-Zahnrad stufenlos einstellbar ist.

18. Verstelleinrichtung nach einem der Ansprüche 1 bis 17, **dadurch gekennzeichnet, dass** das Getriebe-Basismodul (113) so ausgebildet ist, dass es in einer Öffnung in einem Boden, einer Wand oder einem Plattenabschnitt (5) verankerbar ist, und dass der Antriebsstrang (7) durch die Ebene des Bodens, der Wand oder der Platte hindurchführt, wobei in diesem Getriebe-Basismodul (113) zumindest zwei Umlenkgetriebe (11) mittels einer Schnappeinrichtung (16) verankert sind.

19. Verstelleinrichtung nach einem der Ansprüche 1 bis 13, **dadurch gekennzeichnet, dass** die zumindest eine Getriebeanordnung (11) in Form eines Schneckenradgetriebes (11") eine Schnecke (129') als erstes Getriebeglied (29) und ein damit in Wirkverbindung stehendes Schneckenrad (131') als zweites Getriebeglied (31) umfasst, wobei die Schnecke (129') durch zwei Schnapp- und Rastverbindungen (16) gehalten ist, nämlich an jeweils einer vor und nach der Schnecke ausgebildeten Lagerwelle (133, 133').

20. Verstelleinrichtung nach Anspruch 19, **dadurch gekennzeichnet, dass** die Getriebeschnecke (129') um 180° verdreht in den beiden Schnapp- und Rasteinrichtungen (16) einsetzbar ist.

21. Verstelleinrichtung nach einem der Ansprüche 2 oder 19, 20 **dadurch gekennzeichnet, dass** die Gewindeschnecke (129') an ihren beiden gegenüberliegenden und in Axialrichtung versetzt liegenden Enden jeweils mit einer Steckausnehmung (145) unter Ausbildung eines Steckkupplungsbereiches (21) versehen ist, so dass an beiden gegenüberliegenden Enden der Gewindeschnecke (129') eine Welle (13) oder ein Wellenabschnitt (13.1, 13.2, 13.3, 13.4) einsteckbar ist.

22. Verstelleinrichtung nach einem der Ansprüche 2 oder 19 bis 21, **dadurch gekennzeichnet, dass** an dem Schneckenrad bzw. Tellerrad (131') in Axialrichtung der zugehörigen Welle (233) eine Rast- und/oder Schnappeinrichtung (217) ausgebildet ist, worüber das Schneckenrad oder Tellerrad (131') in einer hohlzylinderförmigen Aufnahme (235) des Getriebe-Basismoduls (213) axial anschlagsbegrenzt verdrehbar gehalten ist.

23. Verstelleinrichtung nach einem der Ansprüche 1 bis 22, **dadurch gekennzeichnet, dass** die Steckausnehmungen (145) benachbarter Getriebeglieder (17) koaxial oder fluchtend angeordnet und dass die Wellen (13) parallel oder senkrecht zur Bodenplatte (5) und zu den Gehäusewänden positioniert sind.

24. Verstelleinrichtung nach einem der Ansprüche 1 bis 23, **dadurch gekennzeichnet, dass** die Steckausnehmungen (145) zumindest zweier benachbarter Getriebeglieder (17) nicht koaxial bzw. nicht fluchtend zueinander angeordnet sind und dass zumindest eine Welle (13) gegenüber der Träger- oder Bodenplatte (5) oder zumindest einer Gehäusewand (1a) in einem geneigten Winkel oder in einem Winkel kleiner 10°, 5°, 2°, 1° oder 0,5° verläuft.

25. Verstelleinrichtung nach einem der Ansprüche 1 bis 24, **dadurch gekennzeichnet, dass** die Steckausnehmungen (145) zumindest zweier benachbarter Getriebeglieder (17) nicht koaxial oder nicht fluchtend angeordnet sind, und dass die zugehörige Welle (13) gekrümmt verlegt ist oder mit einem Biegeradius so gekrümmt verlegt ist, dass der Biegeradius der Welle (13) mehr als 250mm, 500mm, 1000mm oder mehr als 2000mm beträgt.

## Claims

1. Modular adjusting device, in particular for RF devices, having the following features:
- comprising at least one rotatable drive train (7) having at least one transmission (11; 11', 11") and having at least one rotatable shaft (13) or one rotatable shaft portion (13.1, 13.2, 13.3, 13.4),
- the at least one transmission (11; 11', 11") comprises at least two rotatable transmission members (17), specifically at least a first and a second transmission member (29, 31), which are in an operative connection with one another or mesh with one another,
- the at least two rotatable transmission members (17; 29, 31) are held in or on a transmission base module (113),
**characterised by** the following further features:
the at least one transmission base module (113) further comprises an associated snap-in and/or latch device (16) for the second transmission member (31),
- the first transmission member (29) is held and secured by the associated snap-in and/or latch device (16) so that it snaps in and is rotatable at the same time, and
- the snap-in and/or latch device (16) is formed in such a way that the first transmission member (29) is held so as to be stop-delimited in the axial direction (X),
- the at least one transmission base module (113) further comprises an associated snap-in and/or latch device (16) for the second transmission member (31),
- the at least one second transmission member (31) is held and secured by the associated snap-in and/or latch device (16) so that it snaps in and is rotatable at the same time,
- the snap-in and/or latch device (16) for holding and securing the at least one second transmission member (31) is formed in such a way that the at least one second transmission member (31) is held so as to be stop-delimited in the axial direction (X), and
- the first and the second rotatable transmission member (29, 31) each comprise a plug-in coupling region (21), in which in each case one of the shafts (13) or one of the shaft portions (13.1, 13.2, 13.3, 13.4) is connected in a rotationally fixed manner to the first or to the second rotatable gear element (29, 31) by means of a plug-in connection.

2. Adjusting device according to claim 1, **characterised in that** the at least one transmission arrangement (11) consists of a deflection transmission or of a mitre gear transmission (11') or a worm gear transmission (11").

3. Adjusting device according to either claim 1 or claim 2, **characterised in that** the deflection transmission (11) is in the form of a transmission gearing.

4. Adjusting device according to any of claims 1 to 3, **characterised in that**, on the transmission base module (113) or on the transmission base module (113) in the form of a transmission mounting plate (115), at least one latch device (151) is formed or two offset latch devices (151) are formed, in which a transmission housing cover (143) is releasably latched, which covers the transmission (11; 11', 11") and by way of which the at least two transmission members (29, 31) in an operative connection with one another are covered and protected, and the snap-in devices (16) are preferably secured in position.

5. Adjusting device according to any of claims 1 to 4, **characterised in that** the shaft (13) and/or the shaft portions (13.1, 13.2, 13.3, 13.4) consist of plastics material or of glass-fibre-reinforced plastics material, the glass fibre content of the shaft (13) or the shaft portion (13.1, 13.2, 13.3, 13.4) being more than 50 %, in particular more than 60 %, 70 %, 80 % and more than 90 %.

6. Adjusting device according to claim 5, **characterised in that** the shaft (13) and/or the shaft portions (13.1, 13.2, 13.3, 13.4) comprise predominantly unidirectional fibres in the axially extending central region and comprise a glass fabric meshwork in the peripheral casing region, which constitutes less than 25 % or less than 20 %, 15 % or 10 % of the diameter of the shaft (13) or of the shaft portions (13.1, 13.2, 13.3, 13.4).

7. Adjusting device according to any of claims 1 to 6, **characterised in that** the drive train (7) is made so as to be intermodulation-proof and the transmission base module (113) and/or the transmission members (17; 29, 31) and/or the shaft (13) and/or the shaft portions (13.1, 13.2, 13.3, 13.4) consist of plastics material and/or comprise plastics material or consist of plastics material formed to be metal-free.

8. Adjusting device according to any of claims 1 to 7, **characterised in that** the transmission members (29, 31) comprise a plug-in coupling region (21), into which the shaft (13) or an end of the shaft (13) or a shaft portion (13.1, 13.2, 13.3, 13.4) can be inserted and is held axially displaceably, bringing about a connection for conjoint rotation between the shaft (13) or a shaft portion (13.1, 13.2, 13.3, 13.4) and the transmission member (29, 31) connected thereto, for which purpose the cross section of the shaft (13) or of the shaft portion (13.1, 13.2, 13.3, 13.4) and the plug-in opening (145) of the plug-in coupling region (21) have a non-round cross-sectional shape or an n-gon cross-sectional shape or an n-gon cross-sectional shape in the form of a regular n-gon, n being either a natural number greater than 2 or being a natural number between 2 and 11.

9. Adjusting device according to any of claims 1 to 8, **characterised in that** the transmission base module (113) comprises at least one and preferably two mutually offset latch devices (35), by means of which the transmission base module (113) can be latched in a base, a wall or a plate by inserting the latch device (35) into corresponding clearances in the wall, the base or the plate.

10. Adjusting device according to any of claims 1 to 9, **characterised in that** the snap-in device (16) comprises snap-in fingers or snap-in hooks (117), which cooperate in pairs and are raised up from the transmission base module (113) to form a separating gap (119), a cylindrical or cylinder-like clearance (123), which projects beyond the width of the separating gap (119) and in which a mounting shaft (133) which is formed on the transmission member (29, 31) can latch, being formed in the region of the separating gap.

11. Adjusting device according to claim 10, **characterised in that** the axial length (135) of the mounting shaft (133) is delimited by two stops (137, 139) which are offset in the axial direction (X), the length (135) of the mounting shaft (133) corresponding to the width (B) of the snap-in fingers and/or snap-in hooks (117) of the snap-in device (16) or being slightly greater, at least 0.1 % or more than 0.2 %, 0.3 %, 0.4 %, 0.5 %, 1 % or 1.5 % greater, than the width (B) of the snap-in fingers and/or snap-in hooks (117).

12. Adjusting device according to claim 11, **characterised in that** the distance between the stops (137, 139) is less than 5 % or less than 4 %, 3 %, 2 %, 0.5 %, 0.4 %, 0.3 %, 0.2 % or 0.1 % longer than the width (B) of the snap-in fingers and/or snap-in hooks (117).

13. Adjusting device according to either claim 11 or claim 12, **characterised in that** one stop (137) is formed by the rear face of the mitre gear (129, 131) and the opposing stop (139) is formed by a shoulder (131) which protrudes radially past the mounting shaft (133) and via which the mounting shaft (133) transitions into the plug-in coupling region (21).

14. Adjusting device according to any of claims 1 to 13, **characterised in that** the at least one transmission (11) in the form of a mitre gear transmission (11') comprises two identical, mutually meshing mitre gears (129, 131) or a pinion and a ring gear (131') meshing therewith or mutually meshing crown gears.

15. Adjusting device according to any of claims 1 to 14, **characterised in that** the at least two transmission members (29, 31) are in a drive connection with a third transmission member (25) interposed in an angular connection at an angle other than 90°.

16. Adjusting device according to any of claims 1 to 15, **characterised in that** at least three mitre gears (129, 131, 133) are each held on the transmission base module (113) by means of a snap-in device (16), the three mitre gears (129, 131, 133) each being arranged so as to be mutually offset by 90° in a plan view, in such a way that the first mitre gear (129) meshes with the second mitre gear (131) and the second mitre gear (131) meshes with the third mitre gear (133), at least the first and the third mitre gear (129, 131) being connected to one of the axles (13) or one of the axle portions (13.1, 13.2, 13.3, 13.4) for conjoint rotation.

17. Adjusting device according to any of claims 1 to 16, **characterised in that** the transmission base module (113) is formed in such a way that a plurality of drive output angles can be implemented by providing a plurality of snap-in devices (16) for the driven gear wheel or **in that** the position of the snap-in device (16) for the driven gear wheel can be adjusted in a continuous manner.

18. Adjusting device according to any of claims 1 to 17, **characterised in that** the transmission base module (113) is formed in such a way that it can be anchored in an opening in a base, a wall or a plate portion (5), and **in that** the drive train (7) passes through the plane of the base, wall or plate, at least two deflection transmissions (11) being anchored in this transmission base module (113) by means of a snap-in device (16).

19. Adjusting device according to any of claims 1 to 13, **characterised in that** the at least one transmission arrangement (11) in the form of a worm gear transmission (11") comprises a worm (129') as the first transmission member (29) and a worm gear (131') in an operative connection therewith as the second transmission member (31), the worm (129') being held by two snap-in and latch connections (16), specifically at one mounting shaft (133, 133') in each case formed upstream and downstream from the worm.

20. Adjusting device according to claim 19, **characterised in that** the transmission worm (129') can be inserted into the two snap-in and latch devices (16) when rotated through 180°.

21. Adjusting device according to any of claims 2, 19 or 20, **characterised in that** the threaded worm (129') is provided, at each of the two opposing ends thereof which are offset in the axial direction, with a plug-in clearance (145) so as to form a plug-in coupling region (21), in such a way that a shaft (13) or a shaft portion (13.1, 13.2, 13.3, 13.4) can be inserted at the two opposing ends of the threaded worm (129').

22. Adjusting device according to any of claims 2 or 19 to 21, **characterised in that** a latch device and/or snap-in device (217), by means of which the worm gear or ring gear (131') is held so as to be rotatable and axially stop-delimited in a hollow cylindrical receiver (235) of the transmission base module (213), is formed on the worm gear or ring gear (131') in the axial direction of the associated shaft (233).

23. Adjusting device according to any of claims 1 to 22, **characterised in that** the plug-in clearances (145) of adjacent transmission members (17) are arranged so as to be coaxial or flush and **in that** the shafts (13) are positioned in parallel with or perpendicularly to the base plate (5) and to the housing walls.

24. Adjusting device according to any of claims 1 to 23, **characterised in that** the plug-in clearances (145) of at least two adjacent transmission members (17) are not arranged so as to be mutually coaxial or flush, and **in that** at least one shaft (13) extends at an inclined angle or at an angle of less than 10°, 5°, 2°, 1° or 0.5° to the support plate or base plate (5) or at least one housing wall (1a).

25. Adjusting device according to any of claims 1 to 24, **characterised in that** the plug-in clearances (145) of at least two adjacent transmission members (17) are not arranged so as to be coaxial or flush, and **in that** the associated shaft (13) is configured so as to be curved or configured with a bending radius in such a way that the bending radius of the shaft (13) is more than 250 mm, 500 mm, 1000 mm or more than 2000 mm.

## Revendications

1. Dispositif de réglage modulaire pour des appareils HF, avec les caractéristiques suivantes :
- avec au moins une chaîne cinématique (7)
avec au moins une transmission (11 ; 11', 11") et avec au moins un arbre (13) rotatif ou un segment d'arbre (13.1, 13.2, 13.3, 13.4) rotatif,
- l'au moins une transmission (11 ; 11', 11") comprend au moins deux éléments de transmission (17) rotatifs, à savoir un premier et un deuxième élément de transmission (29, 31) qui sont en liaison opérationnelle l'un avec l'autre ou s'engrènent,
- les au moins deux éléments de transmission (17 ; 29, 31) rotatifs sont maintenus dans ou sur un module de base de transmission (113),
- l'au moins un module de base de transmission (113) présente un dispositif d'encliquetage et/ou de verrouillage (16) approprié pour le premier élément de transmission (29),
- le premier élément de transmission (29) est maintenu par l'encliquetage et tout en restant rotatif et sécurisé par le dispositif d'encliquetage et/ou de verrouillage (16) approprié, et
- le dispositif d'encliquetage et/ou de verrouillage (16) est conçu de manière à ce que le premier élément de transmission (29, 31) est maintenu limité en butée dans la direction axiale (X),
- l'au moins un module de base de transmission (113) présente en outre un dispositif d'engrenage et/ou de verrouillage (16) approprié pour le deuxième élément de transmission (31),
- l'au moins un deuxième élément de transmission (31) est maintenu par l'encliquetage et tout en restant rotatif et sécurisé par le dispositif d'encliquetage et/ou de verrouillage (16) approprié,
- le dispositif d'encliquetage et/ou de verrouillage (16) permettant de maintenir et de sécuriser l'au moins un deuxième élément de transmission (31) est conçu de manière à ce que l'au moins un deuxième élément de transmission (31) est maintenu limité en butée dans la direction axiale (X), et
- les premier et deuxième éléments de transmission (29, 31) rotatifs présentent respectivement une zone de couplage par raccord (21) dans laquelle respectivement un des arbres (13) ou un des segments d'arbre (13.1, 13.2, 13.3, 13.4) est relié en ne pouvant pas être mis en rotation avec le premier, respectivement avec le deuxième élément de transmission (29, 31) rotatif au moyen d'une liaison enfichable.

2. Dispositif de réglage selon la revendication 1, **caractérisé en ce que** l'au moins un ensemble de transmission (11) est constitué d'un renvoi d'angle, ou d'un engrenage conique (11'), ou d'un engrenage à vis sans fin (11").

3. Dispositif de réglage selon la revendication 1 ou la revendication 2, **caractérisé en ce que** le renvoi d'angle (11) est conçu sous forme d'un engrenage de transmission.

4. Dispositif de réglage selon l'une des revendications 1 à 3, **caractérisé en ce qu'**au moins un dispositif de verrouillage (151) est formé sur le module de base de transmission (113) ou sur le module de base de transmission (113) conçu sous la forme d'une bague d'appui de transmission (115), ou que deux dispositifs de verrouillage (151) décalés sont formés dans lesquels un couvercle de boitier de transmission (143) recouvrant la transmission (11 ; 11', 11") est encliqueté en pouvant se détacher, ce par quoi les au moins deux éléments de transmission (29, 31) agissant ensemble en liaison opérationnelle sont recouverts et protégés et les dispositifs d'encliquetage (16) sont de préférence sécurisés en position fixe.

5. Dispositif de réglage selon l'une des revendications 1 à 4, **caractérisé en ce que** l'arbre (13) et/ou les segments d'arbres (13.1, 13.2, 13.3, 13.4) sont constitués de matière plastique ou de matière plastique renforcée de fibres de verre, où la proportion de fibres de verre au niveau de l'arbre (13), ou du segment d'arbre (13.1, 13.2, 13.3, 13.4), est supérieure à 50 %, notamment supérieure à 60 %, 70 %, 80 %, et s'élève à plus de 90 %.

6. Dispositif de réglage selon la revendication 5, **caractérisé en ce que** l'arbre (13) et/ou les segments d'arbre (13.1, 13.2, 13.3, 13.4) comprennent dans la zone centrale s'étendant axialement principalement des fibres unidirectionnelles et dans la zone d'enveloppe périphérique, qui correspond à moins de 25 % ou moins de 20 %, 15 % ou 10 % du diamètre de l'arbre (13) ou des segments d'arbre (13.1, 13.2, 13.3, 13.4), une étoffe tissée en fibres de verre.

7. Dispositif de réglage selon l'une des revendications 1 à 6, **caractérisé en ce que** la chaîne cinématique (7) est en particulier construite résistante aux intermodulations et le module de base de transmission (113) et/ou les éléments de transmission (17 ; 29, 31), et/ou l'arbre (13), et/ou les segments d'arbre (13.1, 13.2, 13.3, 13.4) sont constitués de matière plastique et/ou comprennent une matière plastique, ou sont constitués de matière plastique conçue sans métal.

8. Dispositif de réglage selon l'une des revendications 1 à 7, **caractérisé en ce que** les éléments de transmission (29, 31) comprennent une zone de couplage par raccord (21), dans laquelle l'arbre (13), ou une extrémité de l'arbre (13), ou d'un segment d'arbre (13.1, 13.2, 13.3, 13.4), est maintenu enfichable et mobile axialement, ce par quoi une liaison ne pouvant être mise en rotation est réalisée entre l'arbre (13) ou un segment d'arbre (13.1, 13.2, 13.3, 13.4) et l'élément de transmission (29, 31) qui lui est relié, raison pour laquelle la section transversale de l'arbre (13), ou du segment d'arbre (13.1, 13.2, 13.3, 13.4), et l'orifice de connexion (145) de la zone de couplage par raccord (21) présentent une forme de section transversale non ronde ou une forme de section transversale n-polygonale, ou une forme de section transversale n-polygonale sous la forme d'un polygone n régulier, où n est soit un nombre naturel supérieur à 2, soit n est un nombre naturel entre 2 et 11.

9. Dispositif de réglage selon l'une des revendications 1 à 8, **caractérisé en ce que** le module de base de transmission (113) comprend au moins un et de préférence, deux dispositifs de verrouillage (35) disposés décalés l'un par rapport à l'autre, au moyen desquels le module de base de transmission (113) peut être verrouillé dans un sol, une paroi ou une plaque par l'enfichage du dispositif de verrouillage (35) dans des évidements correspondants dans la paroi, le sol ou la plaque.

10. Dispositif de réglage selon l'une des revendications 1 à 9, **caractérisé en ce que** le dispositif d'encliquetage (16) comprend des ergots d'encliquetage ou des crochets d'encliquetage (117), qui agissent conjointement par paires et s'élèvent à partir du module de base de transmission (113) moyennant la formation d'une fente de séparation (119), où un évidement (123) en forme de cylindre, ou ressemblant à un cylindre, dépassant la largeur de la fente de séparation (119) est formé dans la zone de la fente de séparation, dans lequel un arbre de roulement (133) qui est conçu sur l'élément de transmission (29, 31) peut se verrouiller.

11. Dispositif de réglage selon la revendication 10, **caractérisé en ce que** la longueur axiale (135) de l'arbre de roulement (133) est délimitée par deux butées (137, 139) situées décalées dans la direction axiale (X), où la longueur (135) de l'arbre de roulement (133) correspond à la largeur (B) des ergots d'encliquetage et/ou des crochets d'encliquetage (117) du dispositif d'encliquetage (16) ou y est légèrement supérieure, est supérieure d'au moins 0,1 %, de plus de 0,2 %, 0,3 %, 0,4 %, 0,5 %, 1 % ou 1,5 % à la largeur (B) des ergots d'encliquetage et/ou des crochets d'encliquetage (117).

12. Dispositif de réglage selon la revendication 11, **caractérisé en ce que** la distance entre les butées (137, 139) est égale à moins de 5 % ou à moins de 4 %, 3 %, 2 %, 0,5 %, 0,4 %, 0,3 %, 0,2 % ou 0,1 % de la largeur (B) des ergots d'encliquetage et/ou des crochets d'encliquetage (117).

13. Dispositif de réglage selon la revendication 11 ou la revendication 12, **caractérisé en ce qu'**une butée (137) est conçue par la face arrière de la roue conique (129, 131) et la butée (139) opposée est conçue par une base d'épaulement (141) faisant saillie radialement par-dessus l'arbre de roulement (133), par-dessus laquelle l'arbre de roulement (133) passe dans la zone de couplage par raccord (21).

14. Dispositif de réglage selon l'une des revendications 1 à 13, **caractérisé en ce qu'**au moins une transmission (11) sous la forme d'un engrenage conique (11') comprend deux roues coniques (129, 131) identiques s'engrenant l'une dans l'autre ou un pignon et une couronne dentée (131') s'engrenant avec, ou des couronnes d'engrenages s'engrenant l'une dans l'autre.

15. Dispositif de réglage selon l'une des revendications 1 à 14, **caractérisé en ce que** les au moins deux éléments de transmission (29, 31) sont en liaison opérationnelle moyennant la connexion intermédiaire d'un troisième élément de transmission (25) dans un raccordement angulaire différent de 90°.

16. Dispositif de réglage selon l'une des revendications 1 à 15, **caractérisé en ce qu'**au moins trois roues coniques (129, 131, 133) sont tenues sur le module de base de transmission (113) au moyen respectivement d'un dispositif d'encliquetage (16), où les trois roues coniques (129, 131, 133) sont respectivement disposées reposant décalées de 90 ° les unes par rapport aux autres dans une vue plongeante, de sorte que la première roue conique (129) s'engrène avec la deuxième roue conique (131) et la deuxième roue conique (131) s'engrène avec la troisième roue conique (133), où au moins les première et troisième roues coniques (129, 133) sont en liaison en ne pouvant pas être mises en rotation avec un des axes (13) ou un des segments d'axe (13.1, 13.2, 13.3, 13.4).

17. Dispositif de réglage selon l'une des revendications 1 à 16, **caractérisé en ce que** le module de base de transmission (113) est conçu de telle manière que plusieurs angles de sortie peuvent être réalisés **en ce que** plusieurs dispositifs d'encliquetage (16) sont prévus pour l'engrenage de sortie ou que la position du dispositif d'encliquetage (16) est réglable de manière continue.

18. Dispositif de réglage selon l'une des revendications 1 à 17, **caractérisé en ce que** le module de base de transmission (113) est conçu de telle manière qu'il peut être ancré dans un orifice dans un sol, une paroi ou un segment de plaque (5) et que la chaîne cinématique (7) traverse le plan du sol, de la paroi ou de la plaque, où au moins deux renvois d'angles (11) sont ancrés dans ce module de base de transmission (113) au moyen d'un dispositif d'encliquetage (16).

19. Dispositif de réglage selon l'une des revendications 1 à 13, **caractérisé en ce que** l'au moins un ensemble de transmission (11) sous la forme d'une transmission à engrenage à vis sans fin (11") comprend une vis sans fin (129') servant de premier élément de transmission (29) et un engrenage à vis sans fin (131') servant de deuxième élément de transmission (31) étant en liaison opérationnelle avec celui-ci, où la vis sans fin (129') est maintenue par deux liaisons par encliquetage et de verrouillage (16), à savoir sur respectivement un arbre de roulement formé avant et un arbre de roulement (133, 133') formé après la vis sans fin.

20. Dispositif de réglage selon la revendication 19, **caractérisé en ce que** la vis sans fin de transmission (129') peut être insérée retournée de 180 ° dans les deux dispositifs d'encliquetage et de verrouillage (16).

21. Dispositif de réglage selon l'une des revendications 2 ou 19, 20, **caractérisé en ce que** la vis sans fin filetée (129') est munie respectivement d'un évidement de raccordement (145) moyennant la formation d'une zone de couplage par raccord (21) au niveau de ses deux extrémités situées opposées et décalées en direction axiale, de sorte qu'un arbre (13), ou un segment d'arbre (13.1, 13.2, 13.3, 13.4), est enfichable aux deux extrémités opposées de la vis sans fin filetée (129').

22. Dispositif de réglage selon l'une des revendications 2 ou 19 à 21, **caractérisé en ce qu'**un dispositif d'encliquetage et/ou de verrouillage (217) est formé sur la roue à vis sans fin, respectivement la couronne (131') dans la direction axiale de l'arbre (233) correspondant, ce par quoi la roue de la vis sans fin ou la couronne (131') est maintenue en pouvant tourner de manière limitée axialement dans un logement (235) en forme de cylindre creux du module de base de transmission (213).

23. Dispositif de réglage selon l'une des revendications 1 à 22, **caractérisé en ce que** les évidements de raccordement (145) d'éléments de transmission (17) voisins sont disposés de manière coaxiale ou alignée et que les arbres (13) sont positionnés parallèlement ou perpendiculairement par rapport à la plaque du sol (5) et aux parois de boitier.

24. Dispositif de réglage selon l'une des revendications 1 à 23, **caractérisé en ce que** les évidements de raccordement (145) d'au moins deux éléments de transmission (17) voisins ne sont pas disposés de manière coaxiale, respectivement, non alignée, les uns par rapport aux autres et qu'au moins un arbre (13) s'étend avec un angle aigu ou avec un angle inférieur à 10 °, 5 °, 2 °, 1 ° ou 0,5 ° par rapport à la plaque support ou de sol (5) ou au moins d'une paroi de boitier (la).

25. Dispositif de réglage selon l'une des revendications 1 à 24, **caractérisé en ce qu'**au que les évidements de raccordement (145) d'au moins deux éléments de transmission (17) voisins ne sont pas disposés de manière coaxiale ou non alignée et que l'arbre (13) correspondant est décalé de manière incurvée, ou est décalé de manière incurvée avec un rayon de courbure tel que le rayon de courbure de l'arbre (13) est supérieur à 250 mm, 500 mm, 1000 mm ou est supérieur à 2000 mm.
